# EUROPEAN PATENT APPLICATION

(11) **EP 4 272 883 A1**
(43) Date of publication of application: **08.11.2023**
(21) Application number: 22784443.8
(22) Date of filing: 15.03.2022
(51) Int. Cl.: B21C 37/08, B21D 3/14, B21D 5/10, B21D 22/00

(54) **METHOD OF GENERATING STEEL-PIPE ROUNDNESS PREDICTION MODEL, ROUNDNESS PREDICTION METHOD, ROUNDNESS CONTROL METHOD, MANUFACTURING METHOD, AND ROUNDNESS PREDICTION DEVICE**

(30) Priority: 05.04.2021 JP 2021063903
(71) Applicant: JFE Steel Corporation, Tokyo 100-0011 (JP)
(72) Inventor: HORIE, Masayuki, Tokyo 100-0011 (JP); HINATA, Kosuke, Tokyo 100-0011 (JP); ISHIGURO, Motoki, Tokyo 100-0011 (JP); YAMAZAKI, Ryosuke, Tokyo 100-0011 (JP)
(74) Representative: Grünecker Patent- und Rechtsanwälte PartG mbB
(86) International application number: PCT/JP2022/011604
(87) International publication number: WO 2022/215458

(57) **Abstract**

A steel pipe out-of-roundness prediction model generation method according to the present invention includes: executing a numerical computation in which an input data is an operational condition dataset including one or more operational parameters selected from operational parameters of a U-press step and one or more parameters selected from operational parameters of an O-press step, and an output data is a steel pipe out-of-roundness information after a pipe expanding step, with the execution of the calculation conducted a plurality of times while changing the operational condition dataset, and generating, by the execution of the numerical computation, a plurality of pairs of data of the operational condition data set and the steel pipe out-of-roundness information data after the pipe expanding step corresponding to the operational condition dataset, as training data; and then generating an out-of-roundness prediction model for which an input data is the operational condition dataset and an output data is the out-of-roundness information of the steel pipe after the pipe expanding step, the generation of the out-of-roundness prediction model performed by machine learning using the plurality of pairs of training data.

## Description

### Field

The present invention relates to a steel pipe out-of-roundness prediction model generation method, a steel pipe out-of-roundness prediction method, steel pipe out-of-roundness control method, steel pipe manufacturing method, and steel pipe out-of-roundness prediction device applicable to the steel pipe after pipe expanding step in a UOE steel pipe manufacturing process.

### Background

Techniques of manufacturing a steel pipe having a large diameter and a large thickness used for a line pipe and the like include a wide-spread technique of manufacturing a steel pipe (referred to as UOE steel pipe) obtained by press forming on a steel sheet having a predetermined length, width, and thickness into a U shape, press forming the sheet into an 0 shape and welding a butt portion to form the sheet into a steel pipe, and expanding the diameter of the steel pipe (referred to as pipe expansion) to improve out-of-roundness. In recent years, there is an increasing demand for providing, as a UOE steel pipe, a steel pipe using a thicker or a higher strength material, together with severer required accuracy for the out-of-roundness of a steel pipe.

In response to this, Patent Literature 1 describes a method of suppressing, in a manufacturing step of a UOE steel pipe including a C-press step (end bending step), a U-press step (U-bend step), and an O-press step (O-bend step), an occurrence of imperfect forming in the O-press step by appropriately selecting an end bending processing width (C-bend length) in the C-press step, a U-bend width in the U-press step, and a curvature radius of a U-bend shoulder portion of a U-press tool. The method described in Patent Literature 1 is supposed to be able to obtain an appropriate steel pipe shape when forming is performed under a predetermined range of conditions regardless of the thickness and quality of the material.

On the other hand, Patent Literature 2 describes a method of reducing the angularity of a steel pipe referred to as peaking to improve the out-of-roundness of the steel pipe by setting the ratio between the outer diameter of the die used in the pipe expanding step constituting the UOE steel pipe manufacturing process before diameter expansion and the product inner diameter of the steel pipe to be manufactured, to fall within a predetermined range. In addition, Patent Literature 3 describes a technique of setting a width of a U-press tool used in a U-press step to 70% or less of an outer diameter of a product for a steel pipe having predetermined strength and size. The method described in Patent Literature 3 is supposed to optimize the contact state between the O-press mold and the formed body in the O-press step and improve the out-of-roundness of the open pipe after the O-press step.

### Citation List

### Patent Literature

Patent Literature 1: JP 55-50916 A
Patent Literature 2: JP 4-71737 A
Patent Literature 3: JP 2004-141936 A

### Summary

### Technical Problem

However, the method described in Patent Literature 1 is insufficient in achieving the out-of-roundness required for the current UOE steel pipe, making it difficult to manufacture a UOE steel pipe having satisfactory out-of-roundness. In addition, the technique provides appropriate conditions as operational conditions of the C-press step and the U-press step, and is not supposed to predict the out-of-roundness of the steel pipe after the pipe expanding step as a product. On the other hand, with the method described in Patent Literature 2, it is difficult to achieve satisfactory out-of-roundness in terms of equipment strength of pipe expanding equipment for a thick and high-strength UOE steel pipe. Further, the UOE steel pipe manufacturing process includes a plurality of steps at least including steps such as a U-press step and an O-press step in addition to the pipe expanding step. However, the method described in Patent Literature 2 has no consideration of the impact of the operational conditions of the steps other than the pipe expanding step on the out-of-roundness of the steel pipe after the pipe expanding step. This makes it difficult to reliably improve the out-of-roundness of the steel pipe after the pipe expanding step.

In addition, Patent Literature 3 describes a case where the out-of-roundness of the open pipe after the O-press step is improved by adjusting the width of the U-press tool to a predetermined range, and suggests that the out-of-roundness after the O-press step changes depending on the relationship between the U-press step and the O-press step. However, since operational conditions of a plurality of manufacturing steps including a pipe expanding step will have an impact on out-of-roundness of the UOE steel pipe product, there is room for improvement in achieving more satisfactory out-of-roundness of the steel pipe. In addition, the method described in Patent Literature 3 does not predict the out-of-roundness of the steel pipe after the pipe expanding step.

The present invention has been made in the view of the above problems, and one object is to provide a steel pipe out-of-roundness prediction model generation method capable of manufacturing an out-of-roundness prediction model that accurately predicts the out-of-roundness of a steel pipe after a pipe expanding step in a UOE steel pipe manufacturing process including a plurality of steps. Another object of the present invention is to provide a steel pipe out-of-roundness prediction method and a steel pipe out-of-roundness prediction device capable of accurately predicting the out-of-roundness of the steel pipe after the pipe expanding step in the UOE steel pipe manufacturing process including a plurality of steps. Another object of the present invention is to provide a steel pipe out-of-roundness control method and a steel pipe manufacturing method capable of manufacturing a UOE steel pipe having satisfactory out-of-roundness.

### Solution to Problem

To solve the problem and achieve the object, a steel pipe out-of-roundness prediction model generation method according to the present invention is a method of generating an out-of-roundness prediction model that predicts an out-of-roundness of a steel pipe after a pipe expanding step, among a steel pipe manufacturing process including: a U-press step of performing forming processing on a steel sheet to be formed into a formed body having a U-shaped cross section using a U-press tool; an O-press step of performing forming processing on the formed body having the U-shaped cross section to be formed into an open pipe; and the pipe expanding step of performing forming processing, by pipe expansion, on a steel pipe obtained by joining ends of the open pipe in a width direction to each other. The method includes: a basic data acquisition step of executing a numerical computation in which an input data is an operational condition dataset including one or more operational parameters selected from operational parameters of the U-press step and one or more operational parameters selected from operational parameters of the O-press step, and an output data is out-of-roundness information of the steel pipe after the pipe expanding step, the execution of the numerical computation being conducted a plurality of times while changing the operational condition dataset, and generating, by the executing of the numerical computation, a plurality of pairs of data of the operational condition data set and the out-of-roundness information data of the steel pipe after the pipe expanding step corresponding to the operational condition dataset, as training data; and an out-of-roundness prediction model generation step of generating an out-of-roundness prediction model for which an input data is the operational condition dataset and an output data is the out-of-roundness information of the steel pipe after the pipe expanding step, the generation of the out-of-roundness prediction model performed by machine learning using the plurality of pairs of training data generated in the basic data acquisition step.

Moreover, in the steel pipe out-of-roundness prediction model generation method according to the present invention, the basic data acquisition step includes a step of calculating, by using a finite element method, the out-of-roundness information of the steel pipe after the pipe expanding step from the operational condition dataset.

Moreover, in the steel pipe out-of-roundness prediction model generation method according to the present invention, the out-of-roundness prediction model includes one or more parameters selected from attribute information of the steel sheet, as the operational condition dataset.

Moreover, in the steel pipe out-of-roundness prediction model generation method according to the present invention, the out-of-roundness prediction model includes one or more operational parameters selected from the operational parameters of the pipe expanding step, as the operational condition dataset.

Moreover, in the steel pipe out-of-roundness prediction model generation method according to the present invention, the steel pipe manufacturing process includes a C-press step of performing forming processing on an end of the steel sheet in a width direction using end bending prior to the U-press step, and the out-of-roundness prediction model includes, as the operational condition dataset, one or more operational parameters selected from the operational parameters of the C-press step.

Moreover, in the steel pipe out-of-roundness prediction model generation method according to the present invention, the operational parameters of the U-press step include one or more operational parameters out of shape information of the U-press tool, a U-press depression amount, a U-press support initial interval, and a U-press support final interval.

Moreover, in the steel pipe out-of-roundness prediction model generation method according to the present invention, the machine learning to be used is a type of machine learning selected from a neural network, decision tree learning, random forest, Gaussian process regression, and support vector regression.

Moreover, a steel pipe out-of-roundness prediction method according to the present invention includes: an operational parameter acquisition step of acquiring online an operational condition dataset to be set as an operational condition of the steel pipe manufacturing process, as an input of the steel pipe out-of-roundness prediction model generated by the steel pipe out-of-roundness prediction model generation method according to the present invention; and an out-of-roundness prediction step of predicting out-of-roundness information of a steel pipe after a pipe expanding step by inputting, to the out-of-roundness prediction model, the operational condition dataset acquired in the operational parameter acquisition step.

Moreover, a steel pipe out-of-roundness control method according to the present invention includes a reconfiguring step of predicting out-of-roundness information of the steel pipe after the pipe expanding step using the steel pipe out-of-roundness prediction method according to claim 8, the prediction being performed before starting a reconfiguration target step which is selected from a plurality of forming processing steps constituting the steel pipe manufacturing process, and reconfiguring one or more operational parameters selected from at least operational parameters of the reconfiguration target step or one or more operational parameters selected from operational parameters of a forming processing step on a downstream side of the reconfiguration target step, based on the predicted out-of-roundness information of the steel pipe.

Moreover, a steel pipe manufacturing method according to the present invention includes a step of manufacturing a steel pipe using the steel pipe out-of-roundness control method according to the present invention.

Moreover, a steel pipe out-of-roundness prediction device according to the present invention is a device which predicts an out-of-roundness of a steel pipe after a pipe expanding step, among a steel pipe manufacturing process including: a U-press step of processing a steel sheet into a formed body having a U-shaped cross section using a U-press tool; an O-press step of processing the formed body having the U-shaped cross section into an open pipe; and the pipe expanding step of performing forming processing, by pipe expansion, on a steel pipe obtained by joining ends of the open pipe in a width direction to each other. The steel pipe out-of-roundness prediction device includes: a basic data acquisition unit that executes a numerical computation in which an input data is an operational condition dataset including one or more operational parameters selected from operational parameters of the U-press step and one or more operational parameters selected from operational parameters of the O-press step, and an output data is out-of-roundness information of the steel pipe after the pipe expanding step, the execution of the numerical computation being conducted a plurality of times while changing the operational condition dataset, and generates, by the execution of the numerical computation, a plurality of pairs of data of the operational condition data set and the out-of-roundness information data of the steel pipe after the pipe expanding step corresponding to the operational condition dataset, as training data; an out-of-roundness prediction model generation unit that generates an out-of-roundness prediction model for which an input data is the operational condition dataset and an output data is the out-of-roundness information of the steel pipe after the pipe expanding step, the generation of the out-of-roundness prediction model performed by machine learning using the plurality of pairs of training data generated by the basic data acquisition unit; an operational parameter acquisition unit that acquires online an operational condition dataset to be set as an operational condition of the steel pipe manufacturing process; and an out-of-roundness prediction unit that predicts online the out-of-roundness information of the steel pipe after the pipe expanding step corresponding to the operational condition dataset acquired by the operational parameter acquisition unit, using the out-of-roundness prediction model generated by the out-of-roundness prediction model generation unit.

Moreover, the steel pipe out-of-roundness prediction device according to the present invention further includes a terminal device that includes an input unit that acquires input information based on a user's operation, and a display unit that displays the out-of-roundness information, wherein the operational parameter acquisition unit updates a part or all of the operational condition dataset in the steel pipe manufacturing process based on the input information acquired by the input unit, and the display unit displays the steel pipe out-of-roundness information of the steel pipe which is predicted by the out-of-roundness prediction unit by using the updated operational condition dataset.

### Advantageous Effects of Invention

According to the steel pipe out-of-roundness prediction model generation method of the present invention, it is possible to generate a steel pipe out-of-roundness prediction model that accurately predicts the out-of-roundness of a steel pipe after the pipe expanding step in the UOE steel pipe manufacturing process including a plurality of steps. Furthermore, according to the steel pipe out-of-roundness prediction method and the steel pipe out-of-roundness prediction device of the present invention, it is possible to accurately predict the out-of-roundness of the steel pipe after the pipe expanding step in the UOE steel pipe manufacturing process including a plurality of steps. In addition, according to the steel pipe out-of-roundness control method and steel pipe manufacturing method according to the present invention, it is possible to manufacture a UOE steel pipe having satisfactory out-of-roundness.

### Brief Description of Drawings

FIG. 1 is a diagram illustrating a steel pipe manufacturing process according to an embodiment of the present invention.
FIG. 2 is a perspective view illustrating an overall configuration of a C-press device.
FIG. 3 is a schematic diagram illustrating a configuration of a press mechanism illustrated in FIG. 2.
FIG. 4 is a schematic diagram illustrating an overall configuration of a U-press device.
FIG. 5 is a schematic diagram illustrating an operation of the U-press device.
FIG. 6 is a schematic diagram illustrating a modification of the U-press device.
FIG. 7 is a schematic diagram illustrating an O-press step.
FIG. 8 is a schematic diagram illustrating a configuration example of a pipe expanding device.
FIG. 9 is a diagram illustrating a method of measuring an outer diameter shape of a steel pipe.
FIG. 10 is a block diagram illustrating a configuration of a steel pipe out-of-roundness prediction model generation device according to an embodiment of the present invention.
FIG. 11 is a block diagram illustrating a configuration of an out-of-roundness offline calculation unit illustrated in FIG. 10
FIG. 12 is a diagram illustrating an example of a relationship between a pipe thickness and a pipe expanding capability for each yield stress of a steel pipe.
FIG. 13 is a diagram illustrating an example of a relationship between a pipe thickness and a pipe expanding capability for each outer diameter of a steel pipe.
FIG. 14 is a diagram illustrating a measurement example of a cross-sectional shape of a steel pipe before a pipe expanding step.
FIG. 15 is a diagram illustrating a relationship between a pipe expansion rate and peaking at three protrusions illustrated in FIG. 14.
FIG. 16 is a diagram illustrating definition of peaking.
FIG. 17 is a diagram illustrating the shape of a U-press tool.
FIG. 18 is a diagram illustrating a steel pipe out-of-roundness control method according to an embodiment of the present invention.
FIG. 19 is a diagram illustrating a configuration of a steel pipe out-of-roundness prediction device according to an embodiment of the present invention.
FIG. 20 is a diagram illustrating an example of a finite element model in an O-press step.

### Description of Embodiments

Hereinafter, a steel pipe out-of-roundness prediction model generation method, a steel pipe out-of-roundness prediction method, a steel pipe out-of-roundness control method, a steel pipe manufacturing method, and a steel pipe out-of-roundness prediction device according to an embodiment of the present invention will be described with reference to the drawings.

### [Steel pipe manufacturing process]

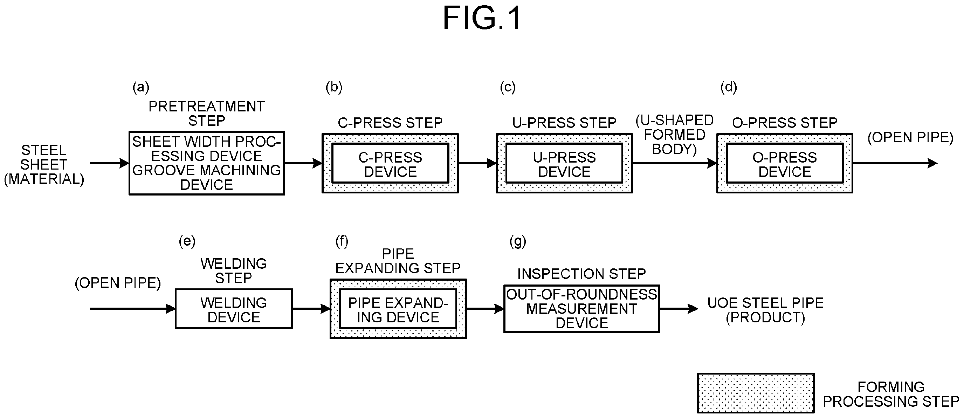

First, a steel pipe manufacturing process according to an embodiment of the present invention will be described with reference to FIG. 1.

FIG. 1 is a diagram illustrating a steel pipe manufacturing process according to an embodiment of the present invention. The steel pipe manufacturing process according to an embodiment of the present invention uses a thick steel sheet manufactured by a thick sheet rolling step which is a preprocessing step of the steel pipe manufacturing process, as a steel sheet to be a material. The thick steel sheet typically has a yield stress of 245 to 1050 MPa, a tensile strength of 415 to 1145 MPa, thickness of 6.4 mm to 50.8 mm, width of 1200 mm to 4500 mm, and a length of 10 m to 18 m.

As illustrated in FIG. 1(a), a steel sheet to be a material is first subjected to machining in a pretreatment step. Specifically, in order to adjust the width of the steel sheet within a predetermined range, the end of the steel sheet in the width direction is cut off or shaved by a sheet width processing device. This allows the outer diameter of the steel pipe after being formed into the UOE steel pipe to fall within the range required as a product. In addition, the end in the width direction of the steel sheet is cut or fused in advance into a chamfered shape referred to as a groove by a groove machining device. This procedure is for ensuring the strength of the welded portion by facilitating the molten metal to flow in the pipe thickness direction of the welded portion in the subsequent welding step.

Subsequently, as illustrated in FIG. 1(b), end bending processing (also referred to as crimping processing) of a steel sheet using a C-press device may be performed as the C-press step. By applying bending deformation to the end of the steel sheet in the width direction beforehand by a mold, it is possible to improve the out-of-roundness of the steel pipe after the pipe expanding step. Next step is a U-press step, as illustrated in FIG. 1(c), which performs forming processing of a steel sheet into a U-shaped formed body (formed body having a U-shaped cross section) using a U-press device. Subsequently, as illustrated in FIG. 1(d), the U-shaped formed body is formed into an open pipe having a substantially tubular cross section with the seam gap reduced by an O-press step using an O-press device.

The subsequent welding step in FIG. 1(e) is a step of restraining the seam gap portion formed at the end of the open pipe so as to allow the ends in the width direction to be in contact with each other, and joining the ends in the width direction to each other by a welding device. With this step, the open pipe is formed into a steel pipe having the ends in the width direction joined to each other. The subsequent pipe expanding step illustrated in FIG. 1(f) is a step of using a pipe expanding device including a plurality of pipe expanding tools each having a curved surface obtained by dividing an arc into a plurality of portions to expand the steel pipe by bringing the curved surface of the pipe expanding tool into contact with the inner surface of the steel pipe. The steel pipe manufactured in this manner is subjected to the determination in the inspection step illustrated in FIG. 1(g) as to whether the quality such as the material property, the appearance, and the dimension satisfies a predetermined specification, and then shipped as a UOE steel pipe (product). In the present embodiment, the inspection step includes an out-of-roundness measurement step of measuring the out-of-roundness of the steel pipe using an out-of-roundness measurement device.

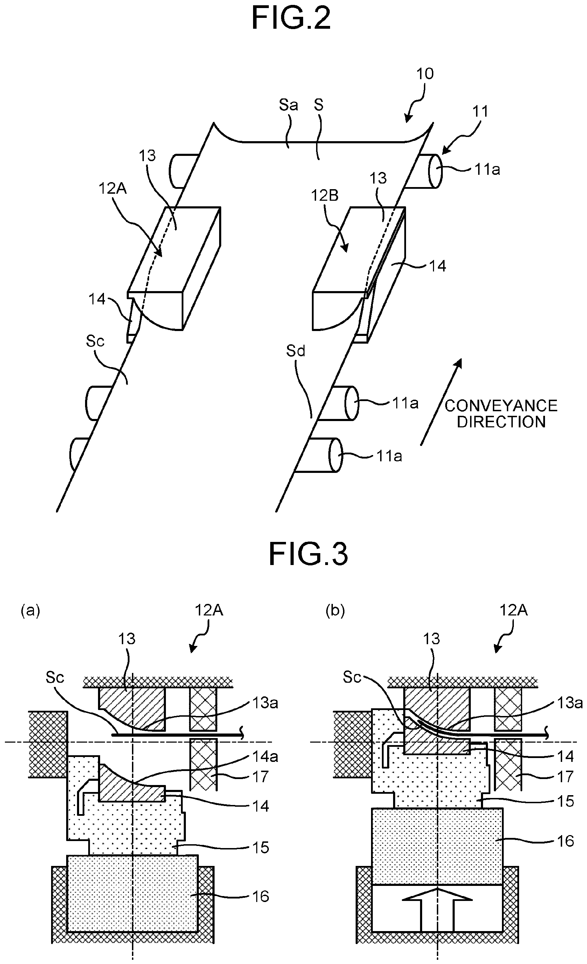

In the present embodiment, the C-press step, the U-press step, the O-press step, and a pipe expanding step, among a series of manufacturing steps including formation of a steel sheet into an open pipe and a pipe expanding step performed after welding, are referred to as "forming processing step". These steps are common steps of controlling the dimensions and shape of the steel pipe by applying plastic deformation to the steel sheet. Hereinafter, individual steps included in the steel pipe manufacturing process will be described in detail with reference to FIGS. 2 to 9.

### (C-press step)

First, with reference to FIGS. 2 and 3, a case where end bending processing of a steel sheet using a C-press device is performed as the C-press step will be described.

FIG. 2 is a perspective view illustrating an overall configuration of the C-press device. As illustrated in FIG. 2, the C-press device 10 includes: a conveyance mechanism 11 that conveys a steel sheet S in a direction along the longitudinal direction as a conveyance direction; a press mechanism 12A that performs bending processing on one width direction end Sc of the sheet to a predetermined curvature with the downstream side of the steel sheet S in the conveyance direction as a front side; a press mechanism 12B that performs bending processing on the other end Sd in the width direction to a predetermined curvature; and an interval adjustment mechanism (not illustrated) that adjusts the interval between the press mechanisms 12A and 12B on left and right according to the width of the steel sheet S subjected to end bending processing. The conveyance mechanism 11 includes a plurality of rotationally driven conveyance rolls 11a each disposed in front of and behind the press mechanisms 12A and 12B. Note that a reference sign Sa in the drawing indicates a leading end (front end in the longitudinal direction) of the steel sheet S.

FIG. 3(a) illustrates a cross section in the width direction of the press mechanism 12A that conducts bending processing on the one end Sc in the width direction of the steel sheet S as viewed in the direction from the upstream side to the downstream side in the conveyance direction of the steel sheet S. The press mechanism 12A and the press mechanism 12B are bilaterally symmetrical and have an identical configuration. The press mechanisms 12A/12B include an upper mold 13 and a lower mold 14 as a pair of molds arranged to face each other in the vertical direction, and a hydraulic cylinder 16 as a mold moving means that pushes up the lower mold 14 together with a tool holder 15 (moves in a direction approaching the upper mold 13) and clamps the molds with a predetermined pressing force. The press mechanisms 12A and 12B may include a clamp mechanism 17 that grips the steel sheet S on the inner side of the upper mold 13 and the lower mold 14 in the width direction. The length of the steel sheet S in the longitudinal direction of the upper mold 13 and the lower mold 14 is normally shorter than the length of the steel sheet S. In this case, the end bending processing is performed a plurality of times while intermittently feeding the steel sheet S in the longitudinal direction by the conveyance mechanism 11 (refer to FIG. 2).

In the C-press step, the lower mold 14 in contact with a surface on the outer side in the bending direction of the ends Sc and Sd in the width direction of the steel sheet S subjected to the end bending processing has a pressing surface 14a facing the upper mold 13. The upper mold 13 has a forming surface 13a having a convex curved surface facing the pressing surface 14a and having a curvature radius corresponding to the inner diameter of the steel pipe to be manufactured. The pressing surface 14a has a concave curved surface shape approaching the upper mold 13 toward the outside in the width direction. However, although the pressing surface 14a of the lower mold 14 has a concave curved surface shape, the pressing surface may be any surface that approaches the upper mold 13 as it goes outward in the width direction, and may be an inclined plane. The curved surface shape of the upper mold 13 and the lower mold 14 is appropriately designed according to the thickness, the outer diameter, and the like of the steel sheet S, and may be appropriately selected and used according to the target material.

FIG. 3(b) is a cross section of the press mechanism 12A in the width direction at the same position as FIG. 3(a), illustrating a state in which the lower mold 14 is pushed up by the hydraulic cylinder 16 and clamped. The lower mold 14 is pushed up by the hydraulic cylinder 16, and the end Sc of the steel sheet S in the width direction has been subjected to bending processing so as to be formed into a shape along the arc-shaped forming surface 13a of the upper mold 13. The width to be subjected to end bending (end bending processing width) varies depending on the width of the steel sheet S, and is generally about 100 to 400 mm.

### (U-press step)

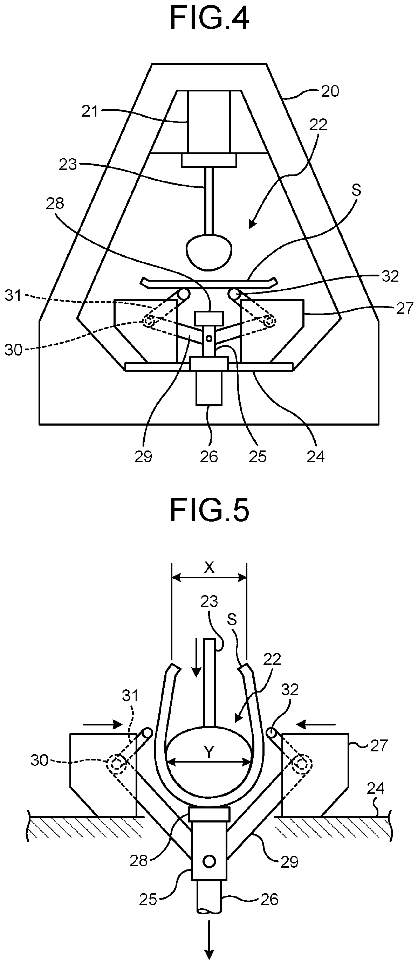

Next, a U-press step will be described with reference to FIGS. 4 to 6.

FIG. 4 illustrates an overall configuration of a U-press device for executing a U-press step. There are various U-press devices, and a typical example of which is illustrated. In the U-press device illustrated in FIG. 4, a lifting cylinder 21 is attached to an upper portion of a machine frame 20 with an upper rod facing downward, and an upper end of a hanging member 23 that supports a U-press tool (U punch) 22 is attached to the upper rod of the lifting cylinder 21. In addition, a sliding cylinder 26 is installed in a central portion of a lower floor surface 24 of the machine frame 20 such that a rod 25 faces the inside of the machine frame 20, and a sliding block 27, provided as a left-right pair, is installed on the side of the sliding cylinder 26. There is a saddle (pedestal) 28 attached to the head of the rod 25 of the sliding cylinder 26. The rod 25 and the sliding block 27 are coupled by a link 29. The link 29 has a pivot center 30 fixed to the sliding block 27, and a brake roll (U-bend support portion) 32 that pushes and bends the steel sheet S is attached to the distal end of an arm 31 extending from the pivot center 30. The steel sheet S to be a material in the U-press step is a steel sheet subjected to end bending processing in the C-press step. Alternatively, it is also allowable to use a steel sheet that is not subjected to end bending processing in the C-press step. The steel sheet S is installed on the left and right brake rolls 32 such that the left/right direction of the U-press device illustrated in FIG. 4 matches the width direction of the steel sheet S. At this time, the steel sheet S is installed substantially symmetrically with respect to the center point between the left and right brake rolls 32. Thereafter, when the U-press tool 22 is lowered by the lifting cylinder 21, deformation by three-point bending is imparted to the steel sheet S between the U-press tool 22 and the left and right brake rolls 32, leading to application of bending deformation of a downward convex shape to the steel sheet S.

FIG. 5 illustrates a state in which the U-press tool 22 is lowered to a preset lowest position by the lifting cylinder 21. When the U-press tool 22 is lowered by the lifting cylinder 21, the steel sheet S comes in contact with the saddle 28, causing the rod 25 to be lowered by the saddle 28. At this time, the link 29 is closed, the sliding block 27 moves to the center side of the machine frame 20, which simultaneously raises the arm 31, causing the left and right brake rolls 32 to move in a direction of closing the interval between individual rolls. With this operation, the brake roll 32 approaches from the side surface side of the steel sheet S formed in a U shape, and the steel sheet S is processed into a U-shaped formed body.

When executing the U-press step, in order to obtain a predetermined shape of the U-shaped formed body, a shape appropriate as the distal end shape of the U-press tool 22 (shape in a range in contact with the steel sheet S) is selected according to the thickness and steel type of the steel sheet S and the target outer diameter of the steel pipe. In addition, the greater the U-press depression amount of the U-press tool 22 (the pushing amount from the position in contact with the upper surface of the steel sheet S of the U-press tool 22 to the lowest position), the greater the winding angle of the steel sheet S with respect to the U-press tool 22, bringing the shape of the region of the U-shaped formed body in contact with the U-press tool 22 to closer to the shape of the distal end of the U-press tool 22. On the other hand, the interval (U-press support initial interval) between the left and right brake rolls 32 can be set by changing the position of the sliding block 27 before the start of the U-press step. This changes the distance between fulcrums when performing bending processing on the steel sheet S by three-point bending, leading to a change in the bending curvature applied to the steel sheet S. Furthermore, adjusting the height of the saddle 28 or the length of the rod 25 will change the height position at which the steel sheet S comes in contact with the saddle 28 during the processing of the U-press tool 22. This changes an open/close position of the link 29, leading to a change in the position of the brake roll 32 being formed and the interval (U-press support final interval) between the left and right brake rolls 32 in a state where the U-press tool 22 reaches the lowest position. This will change the opening amount of the aperture of the U-shaped formed body. Therefore, when the U-press step is executed, these operational parameters are appropriately set according to the thickness of the steel sheet S, the steel type, and the target outer diameter of the steel pipe.

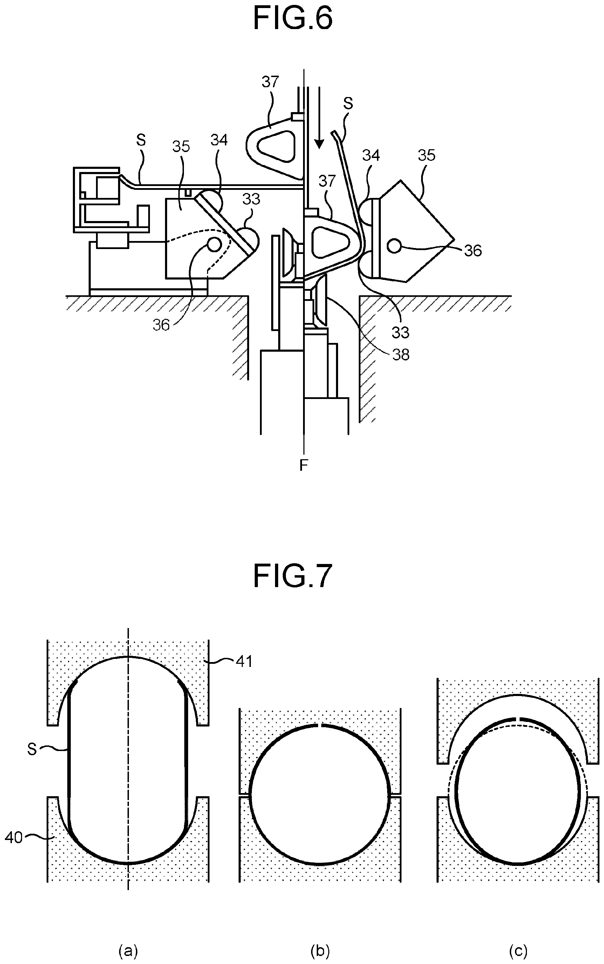

The U-press device illustrated in FIGS. 4 and 5 uses a system in which the brake rolls 32 move in a direction of closing the interval therebetween by the link 29, and is referred to as a Kaiser type U-press device. On the other hand, some U-press devices are referred to as a Verson type U-press device illustrated in FIG. 6. This uses a configuration in which a saddle portion 33 and a U-bend support portion 34 in FIG. 6 are responsible for the functions of the saddle 28 and the brake roll 32 in the Kaiser type U-press device illustrated in FIGS. 4 and 5, respectively, with the saddle portion 33 and the U-bend support portion 34 provided in a lower die (locker die) 35 which is an integrated member. In the Verson type U-press device, the left and right locker dies 35 rotate about a rotation fulcrum 36. When a U-press tool 37 pushes down the steel sheet S, the saddle portion 33 is pressed down, thereby rotating the left and right locker dies 35, causing the left and right U-bend support portions 34 to move so as to close the interval. With this operation, the steel sheet S is formed to have a U-shaped cross section. The item with a reference numeral 38 in FIG. 6 is a member referred to as a cushion, and is used to suppress sudden lowering of the steel sheet S during forming or used to raise the U-shaped formed body after the forming.

Also in the U-press step using the Verson type U-press device illustrated in FIG. 6, the distal end shape of the U-press tool 37 is selected according to the thickness and steel type of the steel sheet S and the target outer diameter of the steel pipe, and the U-press depression amount is set. On the other hand, a U-press support initial interval can be set by changing the setting positions of the left and right locker dies 35. Further, the U-press support final interval can be changed by setting an initial height of the saddle portion 33 (or an initial angle of the locker die 35). Consequently, in the U-press step, the operational conditions of the U-press step can be specified by similar operational parameters regardless of which U-press device is used. Note that the U-press device illustrated in FIG. 6 has a bilaterally symmetrical structure. A diagram illustrated on the left side of a symmetry plane F is a state in which the steel sheet S is installed in the U-press device, and a diagram illustrated on the right side of the symmetry plane F illustrates a state in which the U-press tool 37 is lowered to a preset lowest position.

### (O-press step)

Next, the O-press step will be described with reference to FIG. 7.

The O-press step is performed by incorporating a semicircular die in an O-press device. FIG. 7 schematically illustrates a state in which a U-shaped formed body is deformed in the O-press step. In the O-press step, first, the U-shaped formed body is loaded on a lower die 40 of the O-press device. Next, when an upper die 41, which is a semicircular die open on the lower side is, lowered, an initial state before processing of the O-press step illustrated in FIG. 7(a) is obtained. Subsequently, when the upper die 41 is lowered by a die lifting device (not illustrated), the U-shaped formed body becomes a cylindrical shape having a substantially circular cross section along the upper and lower dies as illustrated in FIG. 7(b). Thereafter, when the upper die 41 is raised to release the restraint on the U-shaped formed body by the die, the U-shaped formed body undergoes elastic recovery so as to return from a substantially circular state illustrated in FIG. 7(b) to a slightly U-shaped shape by spring back. As a result, the shape of the U-shaped formed body after completion of the O-press step becomes a slightly vertically long elliptical shape as illustrated in FIG. 7(c). This state is referred to as an open pipe.

The operational parameter set at execution of the O-press step can be specified using a distance (referred to as an O-press depression amount) between the uppermost portion on the inner surface side of the upper die and the lowermost portion on the inner surface side of the lower die 40 at the time when the upper die 41 illustrated in FIG. 7(b) is at the lowermost position. In addition, the operational parameter may be specified by a gap (referred to as an O-press depression position) between the lowermost portion of the upper die 41 and the uppermost portion of the lower die 40 at the time when the upper die 41 illustrated in FIG. 7(b) is at the lowermost position. On the other hand, the compression ratio in the O-press step is defined as (W- L)/W (× 100%), where W is a width of the steel sheet S to be a material before the start of the U-press step, and L is a circumferential direction length of the portion corresponding to 1/2 of the thickness of the steel sheet S at the time of fastening the upper die 41 (the length of the portion where the die is in contact with the steel sheet S and the portion of the gap between the upper die 41 and the lower die 40). In addition, an O-press die radius which is a curvature radius of a curved surface of the upper die 41 and the lower die 40 coming in contact with the U-shaped formed body may be used as an operational parameter of the O-press step. When the U-shaped formed body is placed on the lower die 40, the U-shaped formed body is usually placed symmetrically such that the lowest point of the U-shaped cross section matches the lowest portion on the inner surface side of the lower die 40. However, the position where the U-shaped formed body is placed may be shifted in some cases depending on the shape of the U-shaped formed body or a change in the die shape due to wear of the lower die 40.

### (Welding step)

Next, the welding step will be described.

Thereafter, the open pipe formed in the O-press step is formed into a steel pipe by butting the end surfaces of the opening portions against each other and welding the end surfaces by a welding machine (joining means). The welding machine (joining means) to be used is, for example, a device including three types of welding machines, that is, a tack welding machine, an inner surface welding machine, and an outer surface welding machine. In these welding machines, the tack welding machine brings the end surfaces butted by the cage rolls into close contact with each other continuously in an appropriate positional relationship, and applies tack welding to the close contact portion over the entire length in the pipe axis direction. The steel pipe that has undergone tack welding is welded (submerged arc welding) from the inner surface of the butt portion by an inner surface welding machine, and further welded (submerged arc welding) from the outer surface of the butt portion by an outer surface welding machine.

### (Pipe expanding step)

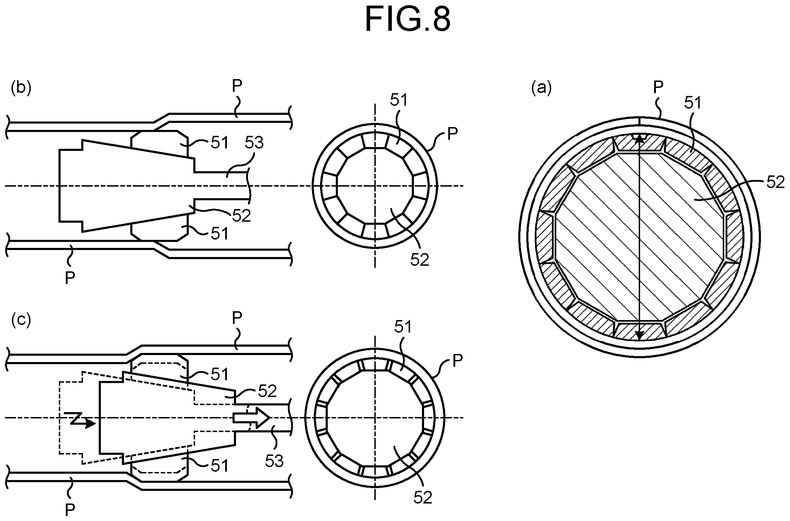

Next, the pipe expanding step will be described with reference to FIG. 8.

The steel pipe having the seam gap portion welded is processed such that a pipe expanding device is inserted into the steel pipe to expand the diameter of the steel pipe (referred to as pipe expansion). FIGS. 8(a) to 8(c) are diagrams illustrating a configuration example of a pipe expanding device. As illustrated in FIG. 8(a), the pipe expanding device includes a plurality of pipe expanding dies 51 having curved surfaces obtained by dividing an arc into a plurality of arcs along the circumferential direction of a tapered outer circumferential surface 52. When expanding the steel pipe using the pipe expanding device, as illustrated in FIGS. 8(b) and 8(c), the pipe expanding die 51 is first aligned with a pipe expanding start position by moving the steel pipe P using a steel pipe moving device. Then, by retracting a pull rod 53 from the pipe expanding start position, first pipe expanding processing is performed.

This allows each of the pipe expanding dies 51 in sliding contact with the tapered outer circumferential surface 52 to be displaced in the radial direction by a wedge action, expanding the steel pipe P. This reduces the level of irregularity in the cross-sectional shape of the steel pipe P, bringing the cross-sectional shape of the steel pipe P closer to a perfect circular shape. Next, the pull rod 53 is advanced to the pipe expanding start position to return the pipe expanding dies 51 to the inside in the vertical axial direction by a release mechanism, and then the steel pipe P is further moved by an amount corresponding to the pitch (axial length) of the pipe expanding dies 51. The pipe expanding dies 51 are adjusted to new pipe expanding positions, and then the above operation is repeated. This makes it possible to perform the pipe expanding processing over the entire length of the steel pipe P by the pitch of the pipe expanding dies 51.

At this time, examples of the operational parameters for determining the operational conditions of the pipe expanding step include the pipe expansion rate, the number of pipe expanding dies, and the radius of the pipe expanding dies. The pipe expansion rate refers to a ratio of a difference between an outer diameter of the steel pipe P after pipe expansion and an outer diameter of the steel pipe P before pipe expansion to an outer diameter of the steel pipe P before pipe expansion. The outer diameter of the steel pipe P before and after pipe expansion can be calculated by measuring the circumferential length of the steel pipe P. The pipe expansion rate can be adjusted by a stroke amount when the pipe expanding dies 51 are expanded in a radial direction. The number of pipe expanding dies refers to the number of pipe expanding dies coming in contact with the steel pipe P disposed in the circumferential direction when pipe expansion is performed. The radius of the pipe expanding die refers to a curvature radius of a portion coming in contact with the steel pipe P in each pipe expanding die in the circumferential direction.

Among these, the pipe expansion rate is the operational parameter that can easily adjust the out-of-roundness after the pipe expanding step at the time of occurrence of variation in attribute values such as yield stress and thickness of the steel sheet to be a material. An increase in the pipe expansion rate will apply the curvature of the region in contact with the pipe expanding die over the entire circumference uniformly onto the pipe according to the radius of the pipe expanding dies, leading to improvement of the out-of-roundness. At this time, the greater the number of pipe expanding dies, the more the local variation in curvature in the circumferential direction of the steel pipe can be suppressed, making it possible to achieve satisfactory out-of-roundness of the steel pipe after the pipe expanding step.

However, the upper limit of the pipe expansion rate is restricted in order to keep the diameter of the steel pipe as a product within a predetermined dimensional tolerance. In addition, a too large pipe expansion rate would increase the gap between the pipe expanding dies in the circumferential direction when the pipe expanding die expands, leading to deterioration of the out-of-roundness of the steel pipe in some cases. Further, a portion softened by a thermal impact during welding is locally and intensively deformed, which might largely reduce the thickness of the portion to bring the pipe thickness outside a predetermined tolerance range. In addition, there is a case where the compressive yield strength of a steel pipe product is lowered due to the Bauschinger effect, and it is necessary to consider setting the upper limit of the pipe expansion rate due to material restrictions when the steel pipe is used in a state where high compressive stress acts in the pipe circumferential direction (for example, a deep sea line pipe). Consequently, the pipe expansion rate in actual operation is set such that the out-of-roundness of the steel pipe falls within a predetermined value at a pipe expansion rate lower than the preset upper limit value of the pipe expansion rate.

### (Inspection step)

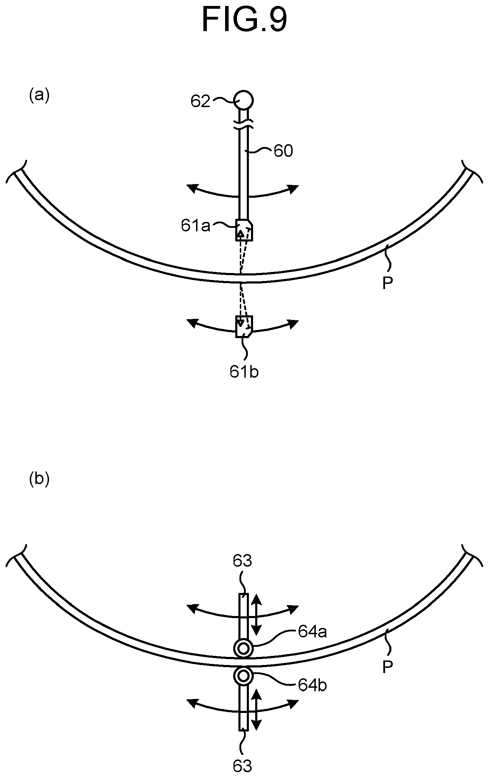

Finally, an inspection step will be described with reference to FIG. 9.

In an inspection step as the final manufacturing step of the steel pipe, the quality of the steel pipe is inspected, and the out-of-roundness of the steel pipe is measured. The out-of-roundness measured in the out-of-roundness measurement step is an index representing the degree of deviation of the outer diameter shape of the steel pipe from the perfect circular shape. Usually, the closer the out-of-roundness is to zero, the closer the cross-sectional shape of the steel pipe is to a perfect circle. The out-of-roundness is calculated based on the outer diameter information of the steel pipe measured by the out-of-roundness measurement device. For example, the steel pipe is equally divided in the circumferential direction at a certain pipe length position and the outer diameters at the opposing positions are selected. When the maximum diameter and the minimum diameter among them are defined as Dmax and Dmin, respectively, the out-of-roundness can be defined as Dmax-Dmin. At this time, the more the number of divisions into equal parts, the more the small irregularities in the steel pipe after the pipe expanding step can be reflected in the index, which is preferable. Specifically, it is preferable to use information divided into 4 to 36000 equal parts. It is more preferable to use equal parts of 360 or more. Note that, in defining the out-of-roundness of the steel pipe, the out-of-roundness may be defined by a difference between the inner diameter shape and the inner diameter of the steel pipe based on the inner diameter shape of the steel pipe instead of the outer diameter of the steel pipe.

Furthermore, the position in the longitudinal direction of the steel pipe targeted for the out-of-roundness measurement can be selected in any manner. The out-of-roundness in the vicinity of the end in the longitudinal direction of the steel pipe may be measured, or the out-of-roundness in the central portion in the longitudinal direction of the steel pipe may be measured. In addition, a plurality of out-of-roundness measurement positions may be selected from the longitudinal direction of the steel pipe to measure the out-of-roundness at each position, or an average value of the out-of-roundness measured at a plurality of positions in the longitudinal direction may be obtained. However, the out-of-roundness does not necessarily have to be represented by the difference between the maximum diameter and the minimum diameter. It is also allowable to use a method of calculating an equivalent temporary perfect circle (diameter) having the same area as the area inside the curve of a figure representing the outer diameter shape of the steel pipe in a continuous diagram and defining a region deviated from the outer diameter shape of the steel pipe as an image based on the temporary perfect circle. This is because image information can be used as an output in machine learning to be described below. As a means of measuring the outer diameter shape of the steel pipe, for example, the following methods can be used.
(a) As illustrated in FIG. 9(a), using a device including an arm 60 rotatable by 360 degrees about a substantially central axis of the steel pipe P, displacement gauges 61a and 61b attached to the distal end of the arm 60, and a rotation angle detector 62 that detects the rotation angle of the rotation shaft of the arm 60, a distance between the rotation center of the arm 60 and a measurement point on the outer circumference of the steel pipe P is measured with the displacement gauges 61a and 61b for each unit of minute angle of rotation of the arm 60, and then the outer diameter shape of the steel pipe P is specified based on the measured value.
(b) As illustrated in FIG. 9(b), using a device including a rotating arm 63 that rotates about the central axis of the steel pipe P, a frame (not illustrated) that is provided on the end side of the rotating arm 63 so as to be movable in the radial direction of the steel pipe P, a pair of pressing rollers 64a and 64b that comes into contact with the outer surface and the inner surface of the end of the steel pipe P and rotates with the rotation of the rotating arm 63, and a pair of pressing air cylinders (not illustrated) fixed to the frame that presses the pressing rollers 64a and 64b against the outer surface and the inner surface of the steel pipe P, the outer diameter shape of the steel pipe is specified based on the amount of movement in the radial direction of the frame and the pressing positions of the pressing rollers 64a and 64b by the individual pressing air cylinders.

Here, in the present embodiment, by comparing an out-of-roundness prediction result obtained by the out-of-roundness prediction model to be described below with the measured value of the out-of-roundness obtained in the inspection step described above, it is possible to verify the out-of-roundness prediction accuracy. Therefore, with respect to the prediction result of the out-of-roundness prediction model to be described below, it is also possible to improve the prediction accuracy obtained by the out-of-roundness prediction model by adding the performance value of the prediction error to the prediction result of the out-of-roundness prediction model.

### [Steel pipe out-of-roundness prediction model generation device]

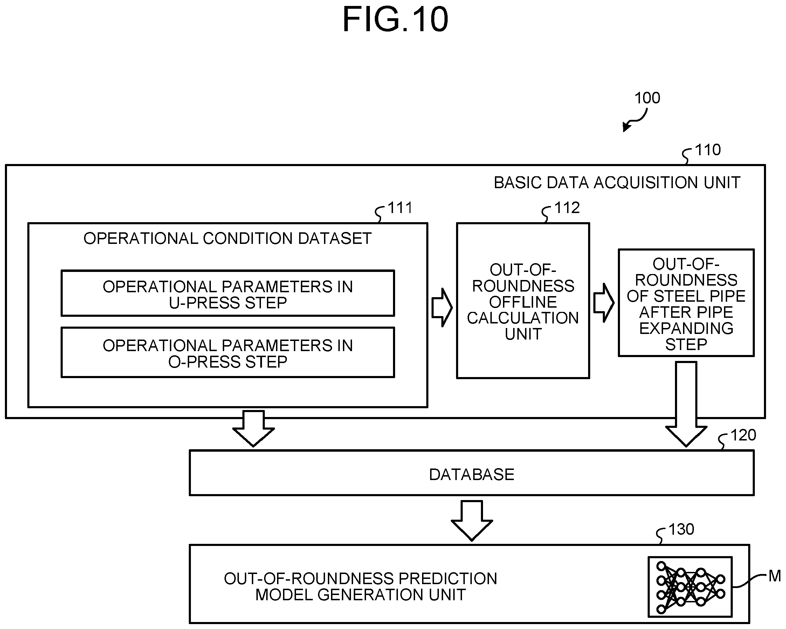

Next, a steel pipe out-of-roundness prediction model generation device according to an embodiment of the present invention will be described with reference to FIGS. 10. to 17.

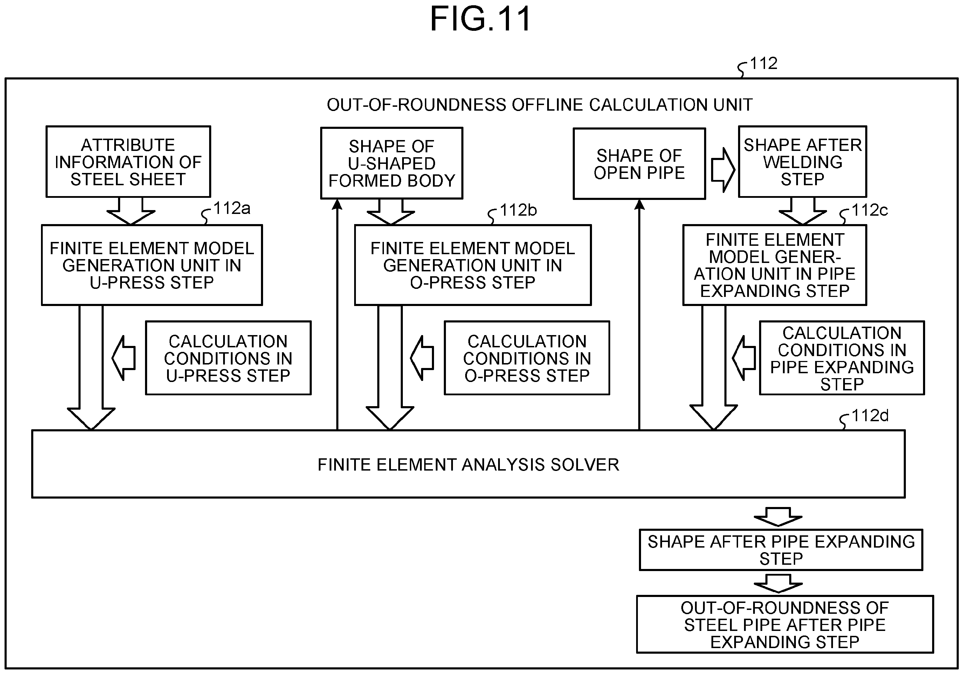

FIG. 10 is a block diagram illustrating a configuration of a steel pipe out-of-roundness prediction model generation device according to an embodiment of the present invention. FIG. 11 is a block diagram illustrating a configuration of an out-of-roundness offline calculation unit 112 illustrated in FIG. 10 As illustrated in FIG. 10, a steel pipe out-of-roundness prediction model generation device 100 according to an embodiment of the present invention is constituted with an information processing device such as a workstation, and includes a basic data acquisition unit 110, a database 120, and an out-of-roundness prediction model generation unit 130.

The basic data acquisition unit 110 includes an operational condition dataset 111 obtained by quantifying factors having an impact on the out-of-roundness of the steel pipe through the U-press step, the O-press step, the welding step, and the pipe expanding step; and an out-of-roundness offline calculation unit 112 that outputs out-of-roundness information after the pipe expanding step using the operational condition dataset 111 as an input condition.

In the present embodiment, the operational condition dataset 111 includes at least operational parameters of the U-press step and operational parameters of the O-press step. This is because the information have a large impact on the out-of-roundness of the steel pipe after the pipe expanding step, and are factors having an impact on the variation in the out-of-roundness. However, in addition to this, attribute information of the steel sheet to be a material, operational parameters of the C-press step, operational parameters of the welding step, and operational parameters of the pipe expanding step may be included. Data used for the operational condition dataset 111 will be described below.

The basic data acquisition unit 110 executes numerical computation by the out-of-roundness offline calculation unit 112 while variously changing the parameters included in the operational condition dataset 111, thereby calculating the out-of-roundness information of the steel pipe after the pipe expanding step corresponding to the plurality of operational condition datasets 111. The range of changing the parameter included in the operational condition dataset 111 is to be determined based on a range that can be changed as a normal operational condition according to the size of the steel pipe to be manufactured, the specification of the facility of each step, and the like.

The out-of-roundness offline calculation unit 112 calculates the shape of the steel pipe after the pipe expanding step by numerical analysis corresponding to a series of manufacturing steps up to the pipe expanding step of the steel pipe, and obtains out-of-roundness information of the steel pipe from the shape of the steel pipe after the pipe expanding step. Here, the series of manufacturing steps includes the U-press step, the O-press step, and the pipe expanding step. As illustrated in FIG. 11, the out-of-roundness offline calculation unit 112 includes: finite element model generation units 112a to 112c corresponding to the respective steps; and a finite element analysis solver 112d. Note that the out-of-roundness offline calculation unit 112 may include a finite element model generation unit corresponding to the C-press step.

The finite element analysis solver 112d can be obtained as a variety of commercially available general-purpose analysis software, and thus it is possible to appropriately select and incorporate some of these for effective application. This is because once a finite element model corresponding to each step is generated, numerical analysis can be performed by a single finite element analysis solver. Alternatively, it is also allowable to use a mode in which the finite element analysis solver 112d is installed on a computer separate from the out-of-roundness offline calculation unit 112, and input data including a finite element model and output data as a calculation result are transmitted to and received from a computer on which the finite element analysis solver 112d is installed. That is, the finite element model generation units 112a to 112c of the out-of-roundness offline calculation unit 112 may be installed on a client computer, the finite element analysis solver 112d may be installed on a server computer, and input data including the finite element model and a calculation result regarding the shape of the steel pipe after the pipe expanding step may be exchanged with each other.

The finite element method is a type of approximate solution method of dividing a continuous body into finite elements. While being the approximate solution, the finite element method is a method to obtain a solution that satisfies the balance of forces and the continuity of displacement at the node points of the elements, making it possible to obtain a highly accurate solution even with non-uniform deformation. In the finite element method, stress, strain, and displacement in an element are independently defined for each element, and are associated with displacement (velocity) of a node so as to be formulated as a problem of solving simultaneous equations. In a widely used method, the strain (increment) or stress is evaluated by using displacement (speed) at a node of an element as an unknown value at this time.

In addition, the finite element method is characterized in that calculation is performed based on the principle of virtual work expressed in an integral form with respect to an equilibrium condition of stress in an element. This method is characterized in that the accuracy of the analysis result varies depending on conditions such as element division, and calculation time is required. Still, the finite element method is characterized by its capability of obtaining a solution even for a problem difficult to solve by other methods, as a solution that satisfies a basic equation of plastic mechanics in a node or an element. Therefore, even with a complicated forming history in the manufacturing step of the steel pipe, it is possible to obtain solutions of the displacement, stress field, and strain field of the workpiece close to the actual phenomenon.

A part of the finite element analysis solver 112d may be replaced with various numerical analysis methods or approximate solutions such as a slip line field theory or an energy method. This makes it possible to shorten the overall calculation time. In addition, the finite element analysis used in the present embodiment executes elastoplastic analysis and does not include analysis of a temperature field such as heat conduction analysis. However, when the working speed is high and the temperature rise of the steel sheet is large due to working heat generation, it is allowable to perform an analysis combining the heat conduction analysis and the elastoplastic analysis. In addition, the elastoplastic analysis of the present embodiment is a cross-sectional two-dimensional analysis in any case of the U-press step, the O-press step, and the pipe expanding step, and it is sufficient to perform numerical analysis on a U-shaped cross section, a cross section of the stationary portion in the longitudinal direction when the steel sheet is formed into an open pipe, and a steel pipe. For high accuracy prediction of the shape of the nonstationary portion such as the leading end and the trailing end of the steel pipe, it is preferable to have a finite element model generation unit that performs three-dimensional analysis including the leading end and the trailing end.

Attribute information of a steel sheet, which is a workpiece in the U-press step, is given as input data. At this time, when the C-press step is included as a preceding step of the U-press step, the shape and stress/strain distribution of the obtained steel sheet obtained as a result of performing finite element analysis of the C-press step will be initial conditions for the workpiece in the U-press step. Here, the finite element model generation unit 112a in the U-press step performs element division inside the steel sheet based on the dimension and shape of the steel sheet before the U-press step. The element division is automatically performed as automatic division based on a preset element division condition. At this time, the distribution of stress and strain remaining inside may be allocated to each element based on the manufacturing history applied to the steel sheet in the preceding step. This is because, in the U-press step mainly including bending processing, the initial residual stress also may have an impact on the shape of the U-shaped formed body of the processed steel sheet.

Together with the finite element model of the U-press step generated in this manner, the calculation condition in the U-press step is transferred as input data to the finite element analysis solver 112d. The calculation conditions in the U-press step are supposed to include operational parameters of the U-press step, and supposed to also include all information necessary for executing finite element analysis specifying all boundary conditions such as physical property values of a steel sheet, a tool, and the like, geometric boundary conditions, and mechanical boundary conditions.

The finite element analysis solver 112d performs numerical analysis under the calculation conditions given as above to obtain the shape of the U-shaped formed body and the distribution of stress and strain remaining inside after the U-press step. The result calculated in this manner is used as input data for the next O-press step in the out-of-roundness offline calculation unit 112. Based on the calculated shape after the U-press step, the finite element model generation unit 112b of the O-press step performs element division within the U-shaped formed body. The element division is automatically performed as automatic division based on a preset element division condition. At this time, it is preferable to assign the distribution of stress and strain calculated for the preceding step to each element.

Together with the finite element model of the O-press step generated in this manner, the calculation condition in the O-press step is transferred as input data to the finite element analysis solver 112d. The calculation conditions in the O-press step are supposed to include operational parameters of the O-press step according to the present embodiment, and supposed to also include all information necessary for executing finite element analysis specifying all boundary conditions such as physical property values of a steel sheet, a tool, and the like, geometric boundary conditions, and mechanical boundary conditions.

The finite element analysis solver 112d performs numerical analysis under the calculation conditions given as above to obtain the shape of the open pipe and the distribution of residual stress and strain inside after the O-press step. The result calculated in this manner is used for input data in the finite element model generation unit 112c of the next step, namely, the pipe expanding step. At this time, also in the welding step of welding the seam gap portion of the open pipe, the residual stress and strain generated in the steel pipe after welding may be obtained by numerical analysis of the welding process.

However, it is difficult, in many cases, to perform precise numerical analysis on the welding step due to the reasons such as the thermal conduction behavior accompanying the melting of the steel sheet at the time of welding, and the impact of on the mechanical properties of the heat-affected zone. In addition, heat input is reduced in order to suppress a material change at the time of actual welding, and the heat-affected zone of the welded portion is limited to the impact on a local region with respect to the shape of the entire steel pipe, and thus, the impact of the presence of such a region on the out-of-roundness of the steel pipe after the pipe expanding step is considered negligible.

In the welding step, welding is performed while restraining the open pipe from the outside so as to reduce the seam gap of the open pipe. Therefore, using the finite element analysis solver 112d, numerical analysis can be performed for the behavior of restraining the seam gap of the open pipe from the surroundings so as to set the seam gap of the open pipe to zero by the finite element method, and the result can be set to the stress-strain state after the welding step.

Meanwhile, when the step of reducing the seam gap in such a welding step corresponds to elastic deformation, the stress/strain distribution after the welding step may be obtained by superimposing an analytical solution of stress and strain on the curved beam according to the beam theory on the distribution of stress and strain in the open pipe calculated by finite element analysis. This makes it possible to shorten the calculation time.

Based on the shape of the steel pipe after the welding step obtained as described above, the finite element model generation unit 112c in the pipe expanding step performs element division inside the steel pipe. The element division is automatically performed as automatic division based on a preset element division condition. At this time, it is preferable to assign the distribution of stress and strain calculated as described above to each element. The generated finite element model of the pipe expanding step is transferred to the finite element analysis solver 112d together with the calculation conditions in the pipe expanding step. The calculation conditions in the pipe expanding step are supposed to include operational parameters of the pipe expanding step according to the present embodiment, and supposed to also include all information necessary for executing finite element analysis specifying all boundary conditions such as physical property values of a steel sheet, a tool, and the like, geometric boundary conditions, and mechanical boundary conditions.

The finite element analysis solver 112d performs numerical analysis under the calculation conditions given as above to obtain the shape of the steel pipe and the distribution of internal stress and strain after the pipe expanding step. The calculated shape of the steel pipe has a non-uniform curvature distribution in the circumferential direction, and the out-of-roundness of the steel pipe is obtained according to the definition of the out-of-roundness in the out-of-roundness measurement step. The numerical analysis using the finite element method by the out-of-roundness offline calculation unit 112 sometimes requires a calculation time of about 1 to 10 hours for one operational condition dataset (single case). However, since the processing is executed offline, there is no constraint on the calculation time. In order to shorten the calculation time for a large number of operational condition datasets, numerical computation corresponding to a plurality of operational condition datasets may be executed in parallel using a plurality of computers. This makes it possible to build a database for generating an out-of-roundness prediction model in a short period of time. Furthermore, in recent years, the calculation time per case is about 1/2 to 1/10 of the conventional calculation time by calculation using GPGPU, and such a computer tool may be used.

Returning to FIG. 10. The database 120 stores the operational condition dataset 111 and its corresponding data related to the out-of-roundness of the steel pipe after the pipe expanding step. The data stored in the database 120 can be obtained offline. Unlike the database accumulated as the performance value of the actual operation, the operational condition dataset can be flexibly set, making it a database suitable for machine learning with less likelihood of occurrence of statistical bias in the operational condition to be set by the operational condition dataset 111. In addition, since calculation results obtained by precise numerical analysis are accumulated, with no accumulation of training data fluctuating over time, the more the data is accumulated, the more the useful database can be obtained. In addition, the database 120 generated by offline calculation can obtain the out-of-roundness under a condition different from the actual manufacturing specification, making it also possible to predict the out-of-roundness in a range without manufacturing performance.

The out-of-roundness prediction model generation unit 130 generates an out-of-roundness prediction model M trained by machine learning to obtain the out-of-roundness information of a steel pipe after the pipe expanding step for the input operational condition dataset 111 based on a relationship between the plurality of pairs of operational condition datasets 111 and the out-of-roundness information of the steel pipe stored in the database 120.
Incidentally, the relationship between the operational conditions in each step and the out-of-roundness information of the steel pipe after the pipe expanding step may exhibit complicated nonlinearity. Therefore, while modeling using an influence coefficient assuming a linearity would result in prediction with low accuracy, the machine learning method using a function having nonlinearity, such as a neural network, will be able to perform prediction with high accuracy. Here, modeling means replacing an input/output relationship in numerical computation with an equivalent functional form.

The number of pieces of data required to generate the out-of-roundness prediction model M is desirably 200 or more pieces of data, although it varies depending on conditions such as a manufacturing range of the size of the steel pipe to be manufactured. Preferably, 500 or more pieces of data and more preferably 2000 or more pieces of data are to be used. The method of machine learning may be a known learning method. The machine learning may be implemented by using, for example, a known machine learning method using a neural network including deep learning, a convolutional neural network (CNN), and a recurrent neural network (RNN). Examples of other methods include decision tree learning, random forest, Gaussian process regression, support vector regression, and k-nearest neighbor algorithm. In addition, an ensemble model combining a plurality of models may be used. While the out-of-roundness prediction model M is generated offline, the out-of-roundness prediction model generation unit 130 may be incorporated in an online control system, and the out-of-roundness prediction model may be periodically updated using a database calculated and accumulated offline as needed.

The out-of-roundness prediction model M for the steel pipe after the pipe expanding step generated as described above has the following characteristics. That is, in the U-press step, the U-press tool is brought into contact with the vicinity of the center portion of the steel sheet in the width direction, and the steel sheet S is processed so as to be wound around the distal end of the U-press tool. In this case, the bending moment applied to the steel sheet varies depending on the contact position with the U-press tool, leading to occurrence of bending deformation having a curvature distribution. In addition, the shape of the distal end of the U-press tool may sometimes be a shape in which curves having a plurality of curvatures are connected, and in this case, the curvature of the steel sheet varies along the surface of the U-press tool. Here, information for specifying the shape of the distal end of the U-press tool is referred to as shape information of the U-press tool.

On the other hand, when a combined deformation including compression and bending is applied to the U-shaped formed body in the O-press step, the bending moment applied in the O-press step is distributed according to the local curvature distribution of the steel sheet applied in the U-press step, similarly to the case where the bending moment acting on a deformed object referred to as a "bent beam" varies depending on the curvature of the beam. Furthermore, in the O-press step, deformation referred to as a "plastic hinge" in which bending strain is locally concentrated may occur in a portion having a large bending moment. In addition, the compressive force and the bending moment applied to the U-shaped formed body in the O-press step differ depending on the opening amount of the end of the U-shaped formed body in the width direction. With this situation, the deformation state of the U-shaped formed body is different in the O-press step, and the curvature distribution along the circumferential direction in the open pipe that has undergone forming processing is also different, which will have an impact on the out-of-roundness of the steel pipe after the pipe expanding step.

That is, since the deformation state applied to the steel sheet in the O-press step varies according to the curvature distribution of the U-shaped formed body that changes depending on the operational conditions of the U-press step, there is an impact on the curvature distribution in the circumferential direction of the steel pipe after the pipe expanding step. The reason why both the operational parameters of the U-press step and the O-press step are used as the input parameters of the out-of-roundness prediction model M is because the operational conditions of the U-press step and the operational conditions of the O-press step have a combined impact on the out-of-roundness of the steel pipe after the pipe expanding step.

It is known that the load in the pipe expanding step is proportional to the pipe thickness × yield stress of steel pipe, and the load (pipe expanding force) in the pipe expanding step increases in a steel pipe having a large pipe thickness or a steel sheet having a large yield stress. On the other hand, the equipment strength of the pipe expanding equipment tends to decrease in inverse proportion to the outer diameter of the pipe expanding tool. Therefore, when the outer diameter of the steel pipe decreases, the outer diameter of the pipe expanding tool inserted into the steel pipe also decreases, leading to a decrease in the equipment strength. In addition, the capability to improve the out-of-roundness of the steel pipe in the pipe expanding step tends to decrease as the load in the pipe expanding step approaches the equipment strength. Therefore, it might be difficult to achieve a sufficient improvement in the out-of-roundness of the steel pipe only by the pipe expanding step. Therefore, it is preferable to optimize the operational parameters of both the U-press step and the O-press step to improve the out-of-roundness of the steel pipe after the pipe expanding step. From such a viewpoint, it is necessary to include the operational parameters of both steps as the input to the out-of-roundness prediction model M.

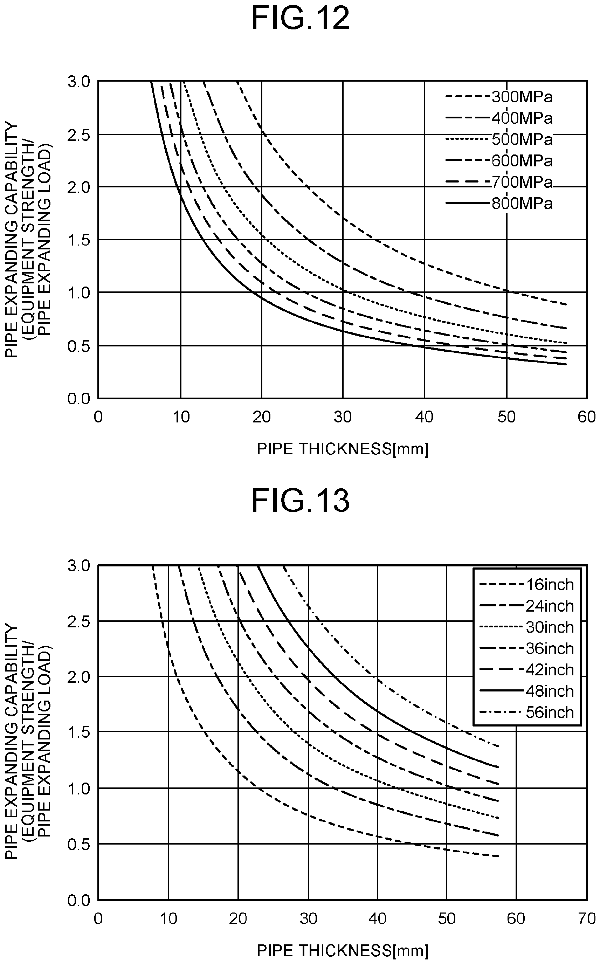

Here, the capability to improve the out-of-roundness of the steel pipe in the pipe expanding step (referred to as pipe expanding capability) is evaluated using the ratio of the equipment strength of the pipe expanding equipment to the pipe expanding force (pipe expanding load). This ratio is an index representing the margin of the equipment with respect to the force required for pipe expansion, and the larger the value, the higher the pipe expanding capability. The equipment strength of the pipe expanding equipment is approximately inversely proportional to the outer diameter of the steel pipe, and the pipe expanding load is proportional to the pipe thickness × yield stress of the steel pipe. Therefore, the pipe expanding capability is reduced in the case of manufacturing a steel pipe having a small diameter, a large thickness, and a high strength. As a specific example of the pipe expanding capability, the relationship among the outer diameter, the pipe thickness, and the yield stress is illustrated in FIGS. 12 and 13 for equipment in which a steel pipe having a pipe thickness of 50.8 mm, an outer diameter of 914.4 mm, and a yield stress of 300 MPa is the upper limit. FIG. 12 illustrates a relationship between the pipe thickness and the pipe expanding capability for each yield stress of a steel pipe having an outer diameter of 914.4 mm. The pipe expanding capability decreases with an increase in the pipe thickness, and decreases with an increase in the yield stress when the pipe thickness is the same. From such a viewpoint, in the present embodiment, the yield stress of the steel pipe is preferably 400 MPa to 800 MPa, and the pipe thickness is preferably 19 mm to 55 mm. More preferably, the yield stress is 500 MPa to 800 MPa and the pipe thickness is 25 mm to 55 mm. FIG. 13 is a diagram illustrating a relationship between the pipe thickness and the pipe expanding capability for each outer diameter of a steel pipe having a yield stress of 300 MPa. The pipe expanding capability decreases with an increase in the pipe thickness, and decreases with a decrease in the outer diameter when the pipe thickness is the same. From such a viewpoint, in the present embodiment, the outer diameter of the steel pipe is preferably 16 inches to 48 inches, and the pipe thickness is preferably 12 mm to 55 mm. More preferably, the outer diameter of the steel pipe is 16 to 36 inches and the pipe thickness is 19 to 55 mm.

In addition, the out-of-roundness prediction model M preferably includes one or more parameters selected from the attribute information of the steel sheet. As the attribute information of the steel sheet, for example, the yield stress and the thickness have a variation to a certain extent when a steel sheet to be a material is manufactured, and these parameters affect the curvature applied to the steel sheet and the curvature after unloading in the bending processing at the time of pushing of the U-press tool. That is, by including a parameter that impacts the deformation state of the steel sheet at the time of bending processing as the attribute information of the steel sheet, the impact of the yield stress and the thickness for each material on the out-of-roundness can be individually considered. In addition, the O-press step is also a step of applying a bending force and a compressive force using a die, and changes the curvature of the steel sheet after unloading depending on the yield stress and the thickness. Therefore, it is preferable to use attribute information of the steel sheet as an input parameter of the out-of-roundness prediction model M.

On the other hand, it is preferable to include one or more operational parameters selected from the operational parameters of the pipe expanding step as the input to the out-of-roundness prediction model M. More preferably, the pipe expansion rate is to be used as the operational parameter of the pipe expanding step. This is because also in the manufacturing step of the UOE steel pipe using the high-strength steel sheet as a material, the pipe expansion rate in the pipe expanding step has a great impact on the final out-of-roundness of the product. However, in a case where the pipe expansion rate can be set only in a narrow range due to the reason such as the pipe expanding capability of the pipe expanding equipment, the range that can be changed as the operational parameter is narrow, and thus the pipe expansion rate is not to be necessarily included in the input of the out-of-roundness prediction model M.

Furthermore, it is preferable to include one or more operational parameters selected from the operational parameters of the C-press step as an input to the out-of-roundness prediction model M. This is because the range in which bending processing is applied to the steel sheet in the C-press step is limited to the vicinity of the end of the steel sheet in the width direction, which does not necessarily match the region in which bending deformation is applied in the U-press step and the O-press step. Therefore, the steel pipe out-of-roundness prediction accuracy after the pipe expanding step is improved by using the operational parameters in the plurality of forming processing steps.

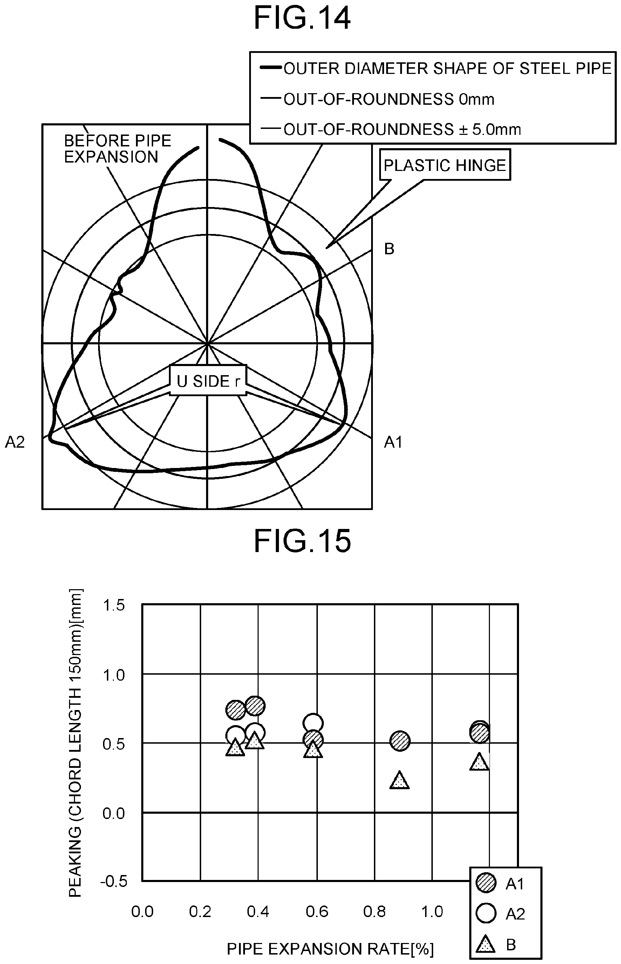

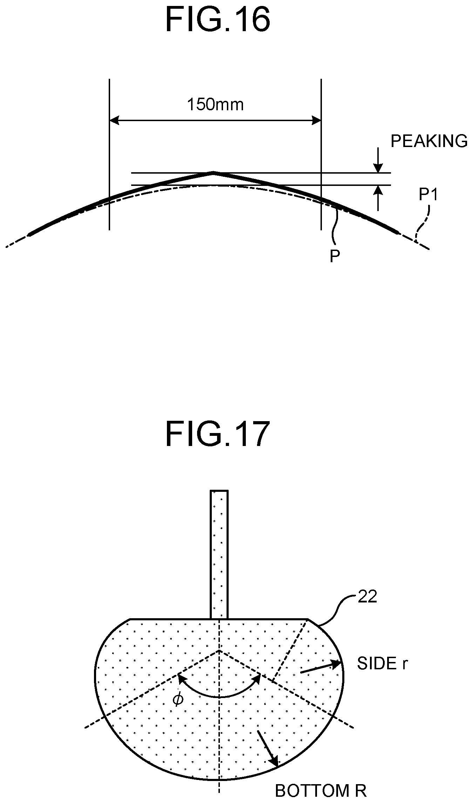

FIGS. 14 to 16 illustrate examples of the impact of the operational conditions of the U-press step and the O-press step on the out-of-roundness of the steel pipe after the pipe expanding step. The targeted steel pipe is a steel pipe of Product Standard X 65, and its dimensions are outer diameter 911.8 mm × pipe thickness 28.9 mm. FIG. 14 is a diagram illustrating a measurement result of the cross-sectional shape of the steel pipe before the pipe expanding step. Since the weld bead portion is thickened, the measurement result of the portion is excluded in the drawing. As the operational conditions of the U-press step, a U-press tool having a punch side r of 178 mm (curvature radius of the side surface portion of the U-press tool 22 illustrated in FIG. 17) was selected to perform forming processing. In this case, since the curvature radius of the side surface portion of the U-press tool is smaller than the inner radius of the steel pipe to be a product, the cross section of the steel pipe has a protruding shape at positions A1 and A2 of the steel sheet in contact with the side surface portion of the U-press tool (near a four o'clock direction and an eight o'clock direction in the cross section of FIG. 14). Furthermore, when the O-press step is executed on a steel sheet having such a state in the U-press step, local bending deformation concentrates on a part of the steel sheet, leading to occurrence of a local protrusion shape due to a plastic hinge in a two o'clock direction (position B) of the steel pipe cross section illustrated in FIG. 14.

Such a protrusion formed on a part of the steel pipe in the circumferential direction may cause an out-of-roundness deterioration referred to as peaking after the pipe expanding step. As illustrated in FIG. 16, the peaking is an index defined by a distance, on a steel pipe cross section after the pipe expanding step, between the protruding point and the point of an arc P1 which is at the center of a chord being a section having a predetermined distance (in this case, 150 mm) and which corresponds to a steel pipe outer diameter passing through an outer circumferential surface of the steel pipe P and both ends of the chord. At this time, the peaking is defined as positive when the peaking point is located on the protruding side of the arc corresponding to the outer diameter of the steel pipe, and as negative when the peaking point is located on the recessed side thereof. That is, when the value of peaking is 0, it means that the point is on an arc corresponding to the outer diameter of the steel pipe, and accordingly, the smaller the absolute value of peaking on the entire surface along the outer circumference of the steel pipe, the more improved the out-of-roundness.

FIG. 15 illustrates a result of examining peaking after expanding the steel pipe focusing on three protrusions A1, A2, and B illustrated in FIG. 14. In FIG. 15, the horizontal axis represents a pipe expansion rate which is an operational parameter of the pipe expanding step, and the vertical axis represents a value of peaking (Body PK). As illustrated in FIG. 15, the protrusions A1 and A2 occurring in the U-press step slightly tend to decrease when the pipe expansion rate is increased, but the decrease is moderate. In contrast, in the protrusion B occurring in the O-press step, the peaking value tends to decrease with an increase in the pipe expansion rate. As described above, the cross-sectional shape formed in the U-press step and the cross-sectional shape formed in the O-press step have different drop behavior of peaking with respect to the pipe expansion rate in the pipe expanding step. Therefore, it is necessary to appropriately set individual operational conditions in each forming processing step in order to improve the out-of-roundness.

The out-of-roundness prediction model of the present embodiment can consider the impact of such operational parameters of a plurality of manufacturing steps on the out-of-roundness of the steel pipe after the pipe expanding step, making it possible to predict the out-of-roundness with high accuracy. In addition, since the out-of-roundness prediction model trained by machine learning is generated, it is possible to immediately calculate the out-of-roundness to be output even when the variable to be input condition is changed, which lead to a feature of capability to immediately set and correct the operational conditions even in the case of using online. Hereinafter, each parameter used for input for the out-of-roundness prediction model will be described.

### (Attribute information of steel sheet)

The applicable attribute information of the steel sheet to be the input data to the out-of-roundness prediction model M can be any parameter having an impact on the out-of-roundness of the steel pipe after the pipe expanding step; the parameter may include yield stress of the steel sheet, tensile strength, modulus of longitudinal elasticity, thickness, thickness distribution in the sheet surface, yield stress distribution in the thickness direction of the steel sheet, the degree of the Bauschinger effect, and surface roughness. In particular, it is preferable to use, as an index, a factor having an impact on the deformation state and spring back of bending processing in the U-press step, and a factor having an impact on the deformation state and spring back of the steel sheet by compression/bending processing in the O-press step.

The yield stress of the steel sheet, the distribution of the yield stress in the thickness direction of the steel sheet, and the thickness of the steel sheet have a direct impact on the state of stress and strain in the bending processing. The tensile strength is a parameter reflecting the state of work hardening in bending processing, and has an impact on the stress state during bending deformation. The Bauschinger effect has an impact on the yield stress and the subsequent work hardening behavior when the loading due to bending deformation is reversed, and impact on the stress state during bending deformation. In addition, the modulus of longitudinal elasticity of the steel sheet has an impact on the spring back behavior after the bending processing. Further, the thickness distribution in the sheet surface changes the distribution of the bending curvature in the U-press step, and the surface roughness has an impact on the frictional state between the die and the steel sheet in the O-press step, leading to an impact on the out-of-roundness of the steel pipe after the pipe expanding step.

Among these pieces of attribute information, it is particularly preferable to use the yield stress, the representative sheet thickness, the thickness distribution information, and the representative sheet width. These items correspond to information measured in a quality inspection step of a thick sheet rolling step which is a step of manufacturing a steel sheet to be a material, and have an impact on deformation behavior in the U-press step and the O-press step as well as having an impact on out-of-roundness of a steel pipe after the pipe expanding step. Furthermore, this is because the information is attribute information representing variation for each steel sheet as a material.

The yield stress corresponds to information that can be obtained from a tensile test of a small test piece for quality assurance collected from a thick steel sheet to be a material, and may be a representative value in a plane of the steel sheet to be a material. In addition, the representative sheet thickness is a thickness representing a thickness in a plane of a steel sheet to be a material, and may be a thickness of a central portion in a width direction of the steel sheet at an arbitrary position in a longitudinal direction of the steel sheet, or an average value of thicknesses in the longitudinal direction. Furthermore, an average value of the sheet thicknesses of the entire in-plane sheet of the steel sheet may be used as the representative sheet thickness. The thickness distribution information refers to information representing the thickness distribution in the plane of the steel sheet. A typical example is a crown which is a thickness distribution in the width direction of the steel sheet. The crown represents a difference in the thickness between a central portion of the steel sheet in the width direction, and a position away from the end of the steel sheet in the width direction by a predetermined distance (for example, 100 mm, 150 mm, or the like). However, the sheet thickness distribution information is not limited thereto, and a coefficient of an approximate expression obtained by approximating the sheet thickness distribution in the width direction with a quadratic or higher function may be used as the thickness distribution information. In addition, the thickness distribution in the longitudinal direction may be used instead of the thickness distribution in the width direction of the steel sheet. Such representative sheet thickness and sheet thickness distribution information correspond to data measured by a sheet thickness meter during rolling in a thick sheet rolling step or data measured in a thick steel sheet inspection step.

The representative sheet width is a representative value regarding the width of the steel sheet as a material. A variation in the width of the thick steel sheet as a material will have an impact on the variation in the outer diameter accuracy of the steel pipe as a product. The value of the representative width may be a width at any position in the longitudinal direction of the steel sheet, or may be an average value of the widths in the longitudinal direction.

On the other hand, in the O-press step, since bending and unbending deformation are imparted to the steel sheet, it is preferable to include attribute information representing the Bauschinger effect of the steel sheet. Information that can be used as the attribute information representing the Bauschinger effect include a constitutive equation expressing a stress-strain relationship of a steel sheet representing the Bauschinger effect and a parameter value for specifying the constitutive equation. This is because these make it possible to specify the mechanical properties of the steel sheet such as kinematic hardening and isotropic hardening, and possible to reflect the anisotropy of the yield stress and the like in the finite element analysis.

### (Operational parameter of C-press step)

When the operational parameters of the C-press step are used for input of the out-of-roundness prediction model M, a parameter for specifying the shape formed by the forming surface 13a of the upper mold 13 and the shape formed by the pressing surface 14a of the lower mold 14 used in the C-press device can be used as the operational parameter. In addition, it is also allowable to use an end bending processing width (width subjected to end bending forming), a feeding amount, a feeding direction, and the number of times of feeding of the steel sheet, a push-up force (C-press force) by the hydraulic cylinder 16, and a gripping force by the clamp in the C-press step, as operational parameters. This is because these items are factors having an impact on the deformation in the end of the steel sheet in the width direction in the C-press step.

Here, there are cases where the shape formed by the forming surface 13a of the upper mold 13 is given as a shape having arcs of a plurality of curvature radii provided in a continuous shape or the shape is given by an involute curve or the like, allowing the use of a parameter for specifying a geometric cross-sectional shape. For example, when the cross-sectional shape is formed by a parabolic shape, the cross-sectional shape can be specified by using coefficients of a first-order term and a second-order term of a quadratic expression representing a parabola passing through an origin, and thus such a coefficient can be used as an operational parameter for the C-press step.

In another case where a plurality of molds are held and appropriately exchanged to be used for forming the shape formed by a forming surface 13a of the upper mold 13 according to conditions such as the outer diameter, the wall thickness, and the type of the steel pipe to be manufactured, a mold management number for specifying a mold to be used in the C-press step may be used as the operational parameter for the C-press step.

### (Operational Parameters of U-press step)

In the present embodiment, the operational parameter for the U-press step is used for the input to the out-of-roundness prediction model M. The operational parameters of the U-press step can include the shape information of the U-press tool (information for specifying the distal end shape of the U-press tool), the U-press depression amount, the U-press support initial interval, and the U-press support final interval. This is because these operational parameters will have a great impact on the deformation behavior of the steel sheet in the U-press step.

As described above, the U-press depression amount, the U-press support initial interval, and the U-press support final interval are operational parameters that can be commonly defined as the representative of the deformation form applied to the steel sheet in both the Kaiser type U-press device and the Verson type U-press device. However, it is allowable use, for each device, parameters that will have indirect impact on these parameters. For example, the opening angle of the link 29 and the position information of the sliding block 27 in the Kaiser type U-press device may be used. This is because these are operational parameters that can be indirectly associated with one of the U-press depression amount, the U-press support initial interval, and the U-press support final interval.

Meanwhile, the U-press tool used may be a tool having a shape illustrated in FIG. 17, for example. The shape of the U-press tool 22 illustrated in FIG. 17 is a shape obtained by giving an arc shape having a radius R in a range of an angle φ from a preset center point as a region coming in contact with the U-press tool 22 at the time of depression of the steel sheet, and by giving a shape of a side surface portion having a radius r smoothly connected from the arc shape of the radius R of the distal end as a region in which the steel sheet comes into contact with the brake roll. In this case, the shape of the U-press tool 22 is specified by three parameters of the angle φ, the distal end radius R (bottom R), and the side radius r (side r). The parameter for specifying the distal end shape of the U-press tool in this manner is referred to as shape information of the U-press tool. However, in a case where a plurality of U-press tools having different distal end shapes are provided according to conditions such as the outer diameter, the thickness, and the steel type of the steel pipe to be manufactured, a U-press tool management number for specifying the U-press tool to be used may be used as the operational parameter of the U-press step.

### (Operational parameters of O-press step)

In the present embodiment, the operational parameter for the O-press step is used for the input to the out-of-roundness prediction model M. Applicable operational parameters of the O-press step include an O-press depression amount, an O-press depression position, and an O-press die R. In particular, it is preferable to use an O-press depression amount. This is because, an increase in the O-press depression amount would lead to a state where a region between the point where the steel pipe receives the restraint and pressing force from the upper mold and the point where the steel pipe is restrained by the lower mold, mainly in the vicinity of three o'clock direction and nine o'clock directions of the steel pipe, are not restrained, to which bending and compression deformations are concentrated. This increases curvature in the region, which has an impact on the final out-of-roundness. At this time, the O-press depression amount, the O-press depression position, and the O-press die R are information necessary for controlling the O-press device, and correspond to set values set by the host computer.

### (Operational parameters of pipe expanding step)

When the operational parameters of the pipe expanding step are used for the input to the out-of-roundness prediction model M, the pipe expansion rate can be used as the operational parameters of the pipe expanding step. The larger the pipe expansion rate, the more improved the out-of-roundness of the steel pipe after the pipe expanding step, but a value equal to or less than a preset upper limit value is used. At this time, since the pipe expansion rate is information necessary for controlling the pipe expanding device, the pipe expansion rate corresponds to the set value set by the host computer. As the operational parameter of the pipe expanding step, the number of pipe expanding dies and the pipe expanding die diameter may be used in addition to the pipe expansion rate.

### [Steel pipe out-of-roundness prediction method]

Next, a steel pipe out-of-roundness prediction method according to an embodiment of the present invention will be described.

The steel pipe out-of-roundness prediction method according to an embodiment of the present invention is a method of predicting the out-of-roundness of the steel pipe after the pipe expanding step using the out-of-roundness prediction model M generated as described above in the online processing in the steel pipe manufacturing process. Prior to the out-of-roundness prediction of the steel pipe after the pipe expanding step, an operational condition dataset to be set as an operational condition of the steel pipe manufacturing process is acquired online (operational parameter acquisition step). This is a step of acquiring necessary data from the host computer that performs overall control of the steel pipe manufacturing process or from an individual forming processing step control computer, as the operational condition dataset to be the input to the out-of-roundness prediction model generated as described above. Here, the "online" means duration of a series of manufacturing steps from the timing before the start of the manufacturing step of the steel pipe to the completion of the pipe expanding step. Therefore, the processing or working does not necessarily have to be in execution in any of the forming processing steps. The period of waiting for conveying the steel sheet to the next step between each forming processing step is also included in "online" in the present embodiment. In addition, the period before the start of the manufacturing step of the steel pipe and after the completion of the thick sheet rolling step of manufacturing the steel sheet as a material can also be included in "online". This is because when the thick sheet rolling step of manufacturing a steel sheet to be a material is completed, an operational condition dataset to be an input to the out-of-roundness prediction model of the present embodiment can be acquired.

As described above, by using the out-of-roundness prediction model generated in the out-of-roundness prediction model generation step by using the operational condition dataset acquired in the operational parameter acquisition step as an input, it is possible to predict the out-of-roundness of the steel pipe after the pipe expanding step corresponding to the input operational condition dataset (out-of-roundness prediction step). With this method, it is possible to verify whether the manufacturing conditions are appropriate in individual manufacturing steps of the steel pipe including: the U-press step of performing forming processing on the steel pipe into the U-shaped formed body by pressing with the U-press tool; the O-press step of reducing the seam gap portion of the U-shaped formed body and performing forming processing on the steel pipe into an open pipe; and the subsequent pipe expanding step of first joining the ends of the open pipe to each other and then expanding the inner diameter of the steel pipe in which the ends are joined to each other. The operational conditions of the U-press step and the O-press step will have a complex impact on the out-of-roundness of the steel pipe after the pipe expanding step, and it is possible to quantitatively evaluate the impact of these factors on the out-of-roundness of the product. Further, according to the out-of-roundness prediction model M using the attribute information of the steel sheet to be a material, even when there is variation in the attribute information of the steel sheet in the upstream step, it is possible to quantitatively evaluate the impact of these factors on the out-of-roundness of the product. This makes it possible to predict variations in out-of-roundness of a steel pipe product based on actual variations in attribute information of a steel sheet to be a material, leading to achievement of changing operational conditions of the U-press step and the O-press step in consideration of such variations in material.

### [Steel pipe out-of-roundness control method]

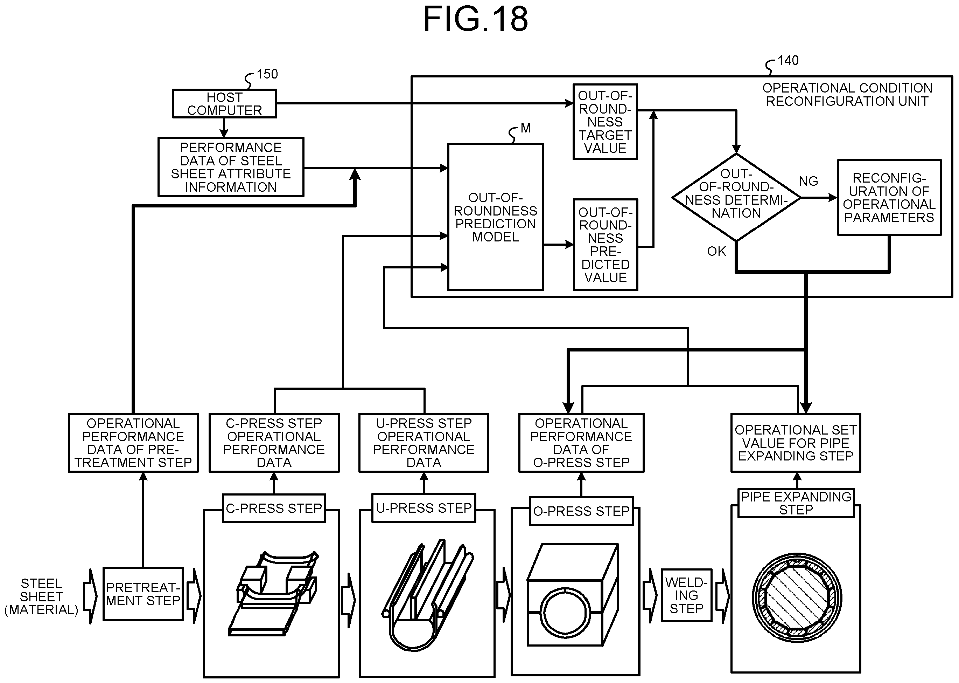

Here, the steel pipe out-of-roundness control method according to an embodiment of the present invention will be described with reference to FIG. 18.

In the present embodiment, the out-of-roundness of the steel pipe is controlled as follows using the steel pipe out-of-roundness prediction method after the pipe expanding step using the out-of-roundness prediction model M of the steel pipe. First, a reconfiguration target step is selected from a plurality of forming processing steps constituting the manufacturing step of the steel pipe. Then, before the start of the reconfiguration target step, the out-of-roundness of the steel pipe after the pipe expanding step is predicted using the out-of-roundness prediction model M. Subsequently, reconfiguration is performed on one or more operational parameters selected from at least the operational parameters of the reconfiguration target step or one or more operational parameters selected from the operational parameters of the forming processing step on the downstream side of the reconfiguration target step so as to reduce the out-of-roundness of the steel pipe after the pipe expanding step.

Here, the plurality of forming processing steps constituting the steel pipe manufacturing process refers to the C-press step, U-press step, O-press step and the pipe expanding step, which are the steps of applying plastic deformation onto the steel sheet to form the steel pipe into a predetermined shape. For the reconfiguration target step, a certain step is selected from these forming processing steps. Before execution of the forming processing in the selected reconfiguration target step, the out-of-roundness of the steel pipe after the pipe expanding step is predicted using the out-of-roundness prediction model M for the steel pipe. At this time, the forming processing of the steel sheet has been completed in the forming processing step on the upstream side of the reconfiguration target step, and thus, when the operational parameters of the forming processing step on the upstream side are to be used, the performance data on operational parameters can be used for the input to the out-of-roundness prediction model M. In contrast, the operational performance data cannot be collected in the downstream forming processing steps including the reconfiguration target step, and thus, the set value preset in the host computer or the like is used for the input to the out-of-roundness prediction model M for the steel pipe. In this manner, the out-of-roundness of the steel pipe after the pipe expanding step for the target material can be predicted.

Subsequently, determination is made as to whether the out-of-roundness predicted as the out-of-roundness of the steel pipe after the pipe expanding step falls within the out-of-roundness allowed as a product. With this operation, when making the out-of-roundness of the steel pipe after the pipe expanding step smaller than the predicted value, it is possible to reconfigure the operational conditions in the reconfiguration target step and the forming processing step on the downstream side of the reconfiguration target step. Here, the operational parameter to be reconfigured may be an operational parameter in the reconfiguration target step or an operational parameter in the forming processing steps downstream of the reconfiguration target step. An operational parameter of the forming processing step suitable for changing the out-of-roundness of the steel pipe after the pipe expanding step will preferably be selected according to a difference between the predicted out-of-roundness and the out-of-roundness allowed as a product. In addition, it is allowable to reconfigure both the operational parameters in the reconfiguration target step and the operational parameters in a certain forming processing step downstream of the reconfiguration target step. This is because the out-of-roundness of the steel pipe after the pipe expanding step can be effectively changed when there is a large difference between the predicted out-of-roundness and the out-of-roundness allowed as a product.

Table 1 specifically illustrates a case of the forming processing step selected as the reconfiguration target step and the forming processing step in which the operational parameters can be reconfigured correspondingly. Case 1 selects the C-press step as the reconfiguration target step in the steel pipe manufacturing process including the C-press step. At this time, before the start of the C-press step, the out-of-roundness of the steel pipe after the pipe expanding step is predicted using the set values of the operational parameters in the forming processing step including the U-press step and the O-press step. When the predicted out-of-roundness is large, it is possible to reconfigure any operational parameter in each forming processing step of the C-press step, U-press step, O-press step, and the pipe expanding step. The operational parameters to be reconfigured are not limited to the operational parameters of the C-press step and may also be the operational parameters of other forming processing steps. When the attribute information of the steel sheet is included as the input to the out-of-roundness prediction model M, the performance data including the measured value and the like related to the attribute information of the steel sheet can be used for the input before starting the C-press step being the reconfiguration target step.

In cases 2 and 3, it is possible to select the reconfiguration target step and the operational parameters to be reconfigured according to the concept similar to case 1. Case 4 is a case where the pipe expanding step is set as the reconfiguration target step. At this time, before the start of the pipe expanding step, the out-of-roundness of the steel pipe after the pipe expanding step is predicted using the out-of-roundness prediction model M. In this case, at least operational performance data in the U-press step and the O-press step can be used for the input to the out-of-roundness prediction model M. In addition, it is also allowable to use performance data of the attribute information of the steel sheet or operational performance data in the C-press step. In this manner, the predicted out-of-roundness of the steel pipe after the pipe expanding step is compared with the out-of-roundness allowed as a product, and when reducing the out-of-roundness, the operational parameter in the pipe expanding step is reconfigured. It is preferable to use the pipe expansion rate as the operational parameter of the pipe expanding step to be reconfigured. Note that the amount of change from the initially set value of the pipe expansion rate as a reconfiguration target may be reconfigured based on performance data obtained from operational experience. However, when the input of the out-of-roundness prediction model M includes the pipe expansion rate of the pipe expanding step, the out-of-roundness of the steel pipe after the pipe expanding step may be predicted again using the reconfigured value of the pipe expansion rate as the input to the out-of-roundness prediction model M, and the appropriateness of the conditions for reconfiguration may be determined.

**Table 1**

| Case | Reconfiguration target step | C-press step | U-press step | O-press step | Pipe expanding step |
|---|---|---|---|---|---|
| 1 | C-press step | ○ | ○ | ○ | ○ |
| 2 | U-press step | - | ○ | ○ | ○ |
| 3 | O-press step | - | - | ○ | ○ |
| 4 | Pipe expanding step | - | - | - | ○ |

| | | | | | |
|---|---|---|---|---|---|
| ○: Forming processing step for which operational parameter can be reconfigured | | | | | |

Here, the steel pipe out-of-roundness control method according to an embodiment of the present invention will be described with reference to FIG. 18. An example illustrated in FIG. 18 is a case where the O-press step is selected as the reconfiguration target step, the U-press step is completed, and the U-shaped formed body is transferred to the O-press device. At this time, the operational performance data in the U-press step is transferred to an operational condition reconfiguration unit 140. The operational performance data may be transmitted from a control computer provided in each forming processing equipment (equipment that executes the forming processing step) via a network. However, the data may be once transferred from the control computer of each forming processing equipment to the host computer 150 that performs overall control of the steel pipe manufacturing process, and then transferred from the host computer 150 to the operational condition reconfiguration unit 140. In addition, data to be transferred to the operational condition reconfiguration unit 140 is the performance data regarding the attribute information of the steel sheet transferred from the host computer 150 as necessary. In a case where the steel sheet undergoes the pretreatment step, a part of the attribute information of the steel sheet is corrected by using the operational performance data in the pretreatment step and then corrected information is transferred to the operational condition reconfiguration unit 140. For example, in a case where the width of the steel sheet to be a material changes in the pretreatment step, the width of the attribute information of the steel sheet is corrected to the width after the pretreatment step. Furthermore, operational performance data in the C-press step may also be transferred as necessary. The set values of the operational parameters of the O-press step and the pipe expanding step, which are forming processing steps downstream of the reconfiguration target step and the reconfiguration target step, are transferred from the control computer of each forming processing equipment to the operational condition reconfiguration unit 140. However, when the set values of the operational parameters in the O-press step and the pipe expanding step are stored in the host computer 150, the set values may be transferred from the host computer 150 to the operational condition reconfiguration unit 140. Note that the out-of-roundness target value determined according to the specification of the steel pipe as a product is transferred from the host computer 150 to the operational condition reconfiguration unit 140.

The operational condition reconfiguration unit 140 predicts the out-of-roundness of the steel pipe after the pipe expanding step based on these pieces of information by using the out-of-roundness prediction model M online, and compares the predicted out-of-roundness (out-of-roundness predicted value) with the target out-of-roundness (out-of-roundness target value). Subsequently, when the predicted out-of-roundness is smaller than the out-of-roundness target value, the operational condition reconfiguration unit 140 determines the operational conditions of the remaining forming processing steps without changing the set values of the operational conditions of the U-press step, the O-press step, and the pipe expanding step, and manufactures the steel pipe. On the contrary, when the predicted out-of-roundness is larger than the out-of-roundness target value, the operational condition reconfiguration unit 140 reconfigures at least the operational condition of the O-press step or the operational condition of the pipe expanding step. Specifically, the O-press depression amount of the O-press step can be reconfigured. In addition, the pipe expansion rate in the pipe expanding step can be reconfigured. Furthermore, both the O-press depression amount and the pipe expansion rate can be reconfigured.

The operational condition reconfiguration unit 140 may perform the out-of-roundness prediction again using a reconfigured value of the operational parameters reconfigured in this manner as the input data to the out-of-roundness prediction model M, confirm whether the predicted out-of-roundness is smaller than the out-of-roundness target value, and determine the reconfigured value of the operational conditions of the O-press step and the pipe expanding step. The reconfigured operational conditions of the O-press step and the pipe expanding step are transmitted to the individual control computers, and the operational conditions of the O-press step and the pipe expanding step are determined. By repeatedly performing the out-of-roundness determination in the operational condition reconfiguration unit 140 a plurality of times, an appropriate operational conditions of the O-press step and the pipe expanding step can be set even when a strict out-of-roundness target value is set, making it possible to manufacture a steel pipe with further improvement in the out-of-roundness. Furthermore, it is also allowable to perform steps in which the out-of-roundness control of the steel pipe after the pipe expanding step having the O-press step defined as the reconfiguration target step is executed in this manner, the out-of-roundness control of the steel pipe after the pipe expanding step having the pipe expanding step defined as the reconfiguration target step is executed again for the steel pipe that has undergone forming processing and be welded into the open pipe. This is because the steel pipe out-of-roundness prediction accuracy is further improved due to the state where the operational performance data of the O-press step has been obtained.

As described above, the steel pipe out-of-roundness control method according to an embodiment of the present invention uses the out-of-roundness prediction model M that takes the impact on the out-of-roundness due to the interaction between the U-press step and the O-press step into consideration, making possible to set an appropriate operational condition for improving the out-of-roundness of the steel pipe after the pipe expanding step, leading to achievement of manufacture of a steel pipe having satisfactory out-of-roundness. In addition, it is possible to realize highly accurate out-of-roundness control reflecting variation in attribute information of a steel sheet to be a material.

### [Steel pipe out-of-roundness prediction device]

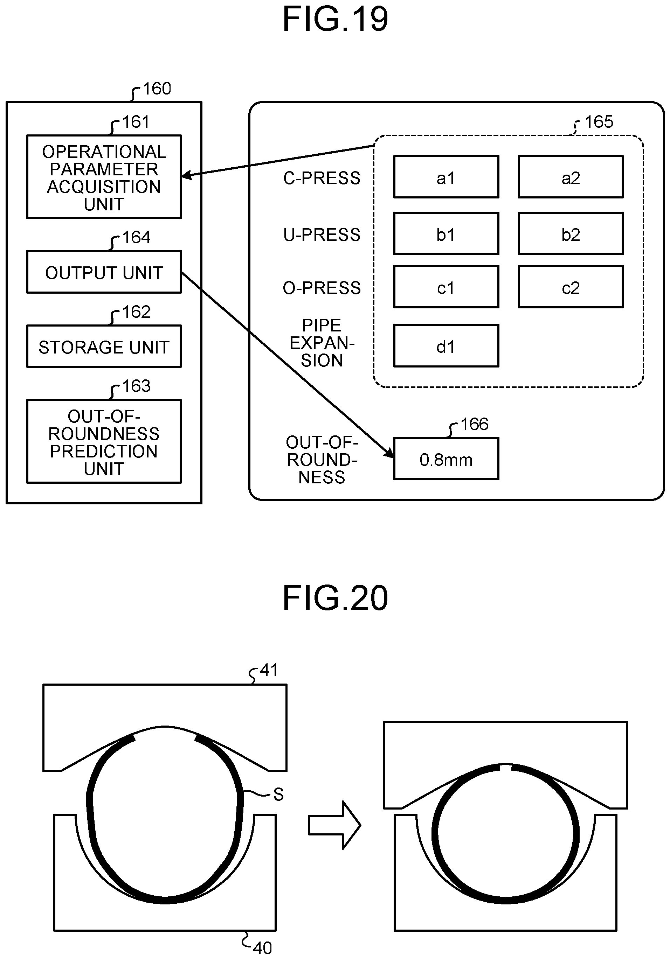

Next, a steel pipe out-of-roundness prediction device according to an embodiment of the present invention will be described with reference to FIG. 19.

FIG. 19 is a diagram illustrating a configuration of a steel pipe out-of-roundness prediction device according to an embodiment of the present invention. As illustrated in FIG. 19, a steel pipe out-of-roundness prediction device 160 according to an embodiment of the present invention includes an operational parameter acquisition unit 161, a storage unit 162, an out-of-roundness prediction unit 163, and an output unit 164.

The operational parameter acquisition unit 161 includes a certain interface capable of acquiring the out-of-roundness prediction model M generated by the machine learning unit from the steel pipe out-of-roundness prediction model generation device 100, for example. For example, the operational parameter acquisition unit 161 preferably includes a communication interface for acquiring the out-of-roundness prediction model M from the steel pipe out-of-roundness prediction model generation device 100. In this case, the operational parameter acquisition unit 161 may receive the out-of-roundness prediction model M from the steel pipe out-of-roundness prediction model generation device 100 based on a predetermined communication protocol. In addition, the operational parameter acquisition unit 161 acquires operational conditions for a forming processing equipment (facility for executing the forming processing step) from a control computer or a host computer installed in the facility used in each forming processing step. For example, the operational parameter acquisition unit 161 preferably includes a communication interface for acquiring operational conditions. In addition, the operational parameter acquisition unit 161 may acquire input information based on a user's operation. In this case, the steel pipe out-of-roundness prediction device 160 further includes an input unit including one or more input interfaces that detect a user input and acquire input information based on the user's operation. Examples of the input unit include, but are not limited to, a physical key, a capacitive key, a touch screen integrated with a display of the output unit, a microphone for voice input, and the like. For example, the input unit receives an input of the operational condition for the out-of-roundness prediction model M acquired from the steel pipe out-of-roundness prediction model generation device 100 by the operational parameter acquisition unit 161.

The storage unit 162 includes at least one semiconductor memory device, at least one magnetic memory device, at least one optical memory device, or a combination of at least two of these. The storage unit 162 functions as, for example, a main storage device, an auxiliary storage device, or cache memory. The storage unit 162 stores any kind of information used for the operation of the steel pipe out-of-roundness prediction device 160. The storage unit 162 stores, for example, the out-of-roundness prediction model M acquired from the steel pipe out-of-roundness prediction model generation device 100 by the operational parameter acquisition unit 161, the operational condition acquired from the host computer by the operational parameter acquisition unit 161, and the out-of-roundness information predicted by the steel pipe out-of-roundness prediction device 160. The storage unit 162 may store a system program, an application program, and the like.

The out-of-roundness prediction unit 163 includes one or more processors. In the present embodiment, the processor includes, but not limited to, a general-purpose processor or a dedicated processor specialized for specific processing. The out-of-roundness prediction unit 163 is communicably connected to individual components constituting the steel pipe out-of-roundness prediction device 160, and controls the operation of the entire steel pipe out-of-roundness prediction device 160. The out-of-roundness prediction unit 163 may be any general-purpose electronic device such as a personal computer (PC) or a smartphone. The out-of-roundness prediction unit 163 is not limited thereto, and may be one server device or a plurality of server devices capable of communicating with each other, or may be another electronic device dedicated to the out-of-roundness prediction device 160. The out-of-roundness prediction unit 163 calculates a predicted value of the steel pipe out-of-roundness information using the operational conditions acquired through the operational parameter acquisition unit 161 and using the out-of-roundness prediction model M acquired from the steel pipe out-of-roundness prediction model generation device 100.

The output unit 164 outputs the predicted value of the out-of-roundness information of the steel pipe calculated by the out-of-roundness prediction unit 163 to a device for setting the operational conditions of the forming processing equipment. The output unit 164 may include one or more output interfaces that output information and notify the user. The output interface is a display, for example. Examples of the display include an LCD or an organic EL display. The output unit 164 outputs data obtained by the operation of the steel pipe out-of-roundness prediction device 160. The output unit 164 may be connected to the steel pipe out-of-roundness prediction device 160 as an external output device instead of being provided in the steel pipe out-of-roundness prediction device 160. As the connection method, for example, any method such as USB, HDMI (registered trademark), or Bluetooth (registered trademark) can be used. Examples of the output unit 164 include, but are not limited to, a display that outputs information by video, a speaker that outputs information by audio, and the like. For example, the output unit 164 presents the predicted value of the out-of-roundness information calculated by the out-of-roundness prediction unit 163 to the user. The user can appropriately set the operational conditions of the forming processing equipment based on the predicted value of the out-of-roundness presented by the output unit 164.

A more preferable form of the steel pipe out-of-roundness prediction device 160 after the pipe expanding step as described above is a terminal device such as a tablet terminal including: an input unit 165 that acquires input information based on a user's operation; and a display unit 166 that displays a predicted value of the out-of-roundness information calculated by the out-of-roundness prediction unit 163. This type of device has a function of acquiring input information based on a user's operation from the input unit 165, and updating a part or all of the operational parameters of the forming processing step already input to the steel pipe out-of-roundness prediction device 160, by using the acquired input information. That is, when the out-of-roundness information of the steel pipe has been predicted by the out-of-roundness prediction unit 163 for the steel sheet being processed in the forming processing equipment, it is possible to provide a function of receiving an operation, made by an operator using the terminal device, of performing a correction input of a part of the operational parameters of the forming processing step already input to the operational parameter acquisition unit 161. At this time, the operational parameter acquisition unit 161 holds the initial input data for the operational parameters to which the correction input has not been made from the terminal device among the operational parameters of the forming processing step, and changes only the operational parameter to which the correction input has been made. With this configuration, new input data to the out-of-roundness prediction model M is generated in the operational parameter acquisition unit 161, and a predicted value of the out-of-roundness information based on the input data is calculated by the out-of-roundness prediction unit 163. Furthermore, the calculated predicted value of the out-of-roundness information is displayed on the display unit 166 of the terminal device through the output unit 164. With this procedure, the person such as an operator of the forming processing equipment and a factory manager can immediately confirm the predicted value of the out-of-roundness information when the operational parameter of the forming processing step has been changed, and can promptly change the operational condition to an appropriate operational condition.

### [Examples]

### [Example 1]

In the present Example, an operational condition dataset including the following operational parameters was set in the basic data acquisition unit 110 illustrated in FIG. 10. A target steel pipe to be a product after the pipe expanding step was a steel pipe of API grade X 56, pipe thickness of 31.8 mm × outer diameter of 914.4 mm. First, the attribute information of the steel sheet was set to a sheet thickness of 31.8 mm and a sheet width of 2751 mm, and the yield stress was included in the operational condition dataset as the attribute information of the steel sheet so as to correspond to a steel sheet having a tensile strength of 480 MPa to 600 MPa. The sheet width was set to the sheet width obtained after the pretreatment step. As the operational parameters of the C-press step, the calculation condition of imparting the end bending to the range of 180 mm from the end in the width direction as the end bending processing width was set with the curvature radius of the forming surface of the upper mold R 310 mm, but this condition was not included in the input of the out-of-roundness prediction model.

The operational parameters of the U-press step were set based on the U-press step by a Kaiser-type U-press device, and a corresponding finite element model of the U-press step was generated. Regarding the shape information of the U-press tool, the condition of a bottom R of 362 mm and a bottom R angle of φ 120 degrees, and a side r of two levels of conditions 178 mm and 191 mm was used to perform calculation and this condition was included in the operational condition dataset. In addition, regarding operational parameters in the U-press step, the U-press support final interval was varied in a range of 564 ± 30 mm, and the U-press depression amount was varied in a range of 782.6 ± 12.7 mm, and these conditions were also included in the operational condition dataset of the U-press step.

On the other hand, regarding the operational parameters of the O-press step, the upper and lower molds were set to have an O-press die radius of 451 mm, the arc of the upper die was set to have a depth of 451 mm, and the arc of the lower die was set to have a depth of 438 mm. In addition, the calculation condition was changed so that the distance (O-press depression amount) between the uppermost point of the upper die and the lowermost point of the lower die was 903 ± 3 mm, and this condition was included in the operational condition dataset of the O-press step. An example of a finite element model in the O-press step is illustrated in FIG. 20. Furthermore, in the present Example, as the operational parameter of the pipe expanding step, on the premise of a die having a shape of a pipe expanding die radius of 390 mm divided into 12 in the circumferential direction as a pipe expanding die, the pipe expansion rate was varied in a range of 0.4% to 1.6%, and this condition was included in the operational condition dataset of the pipe expanding step.

Regarding the welding step, numerical analysis was performed for the behavior of restraining the seam gap of the open pipe from the surroundings so as to set the seam gap of the open pipe to zero by the finite element method, and the result was set to the stress-strain state after the welding step. Specifically, a finite element analysis was performed on a behavior of disposing nine cage rolls at the seam gap portion and at positions of 24, 65, 105, and 148 degrees from the seam gap portion with respect to the open pipe after the O-press step, and pushing the cage rolls until the cage rolls were inscribed in a circle having a diameter of 905.5 mm. However, there were no considerations of the thermal impact at the time of welding, and the stress-strain state of the open pipe in a state where the seam gap was zero after the cage roll was pushed was set as the stress-strain state of the steel pipe after the welding step, and data was transferred to the finite element model generation unit of the next pipe expanding step. As the out-of-roundness of the steel pipe after the pipe expanding step, which is the output of the out-of-roundness prediction model, the outer diameter shape of the steel pipe after the pipe expanding step acquired by the out-of-roundness offline calculation unit 112 was divided into 1080 points in the circumferential direction, and the difference between the maximum diameter Dmax and the minimum diameter Dmin was used.

As described above, the out-of-roundness prediction model of the steel pipe after the pipe expanding step according to the present Example includes the U-press support final interval and the U-press depression amount as the operational parameters of the U-press step, and includes the O-press depression amount as the operational parameters of the O-press step. Further, the yield stress was included in the operational condition dataset as the attribute information of the steel sheet, and the pipe expansion rate was included in the operational condition dataset as the operational parameter of the pipe expanding step. The data necessary for the finite element analysis of the forming processing step including such an operational condition dataset was provided to the out-of-roundness offline calculation unit 112 to calculate the out-of-roundness of the steel pipe after the pipe expanding step. The training dataset acquired by the calculation was accumulated in the database 120, and the out-of-roundness prediction model M was generated by the out-of-roundness prediction model generation unit 130.

The out-of-roundness offline calculation unit 112 has set two-dimensional plane strain elements obtained by dividing a steel sheet before the C-press step as a material into 720 in the width direction and 18 in the thickness direction, and performed finite element analysis in the order of the C-press step, the U-press step, the O-press step, the welding step, and the pipe expanding step. The finite element analysis solver used in the present Example was Abaqus 2019, and the calculation time per case was approximately three hours. The number of datasets accumulated in the database 120 was 300, and Gaussian process regression using a radial basis function as a basis function was used as a machine learning model. The out-of-roundness prediction model M thus generated was installed on the system illustrated in FIG. 18 as an online model, and with the out-of-roundness target value set to 8 mm, the performance value of the yield stress of the steel sheet was acquired from the material inspection result in the thick sheet rolling step as the preceding step as the performance data of the attribute information of the steel sheet as the material from the host computer.

As a first example, first, the U-press step was set as a reconfiguration target step, and after the C-press step was completed and before shifting to the U-press step, the performance value of the yield stress, which is attribute information of the steel sheet, was used as the input to the out-of-roundness prediction model M, and the operational parameters of the U-press step and the O-press step were reconfigured. However, the set value of the operational condition of the pipe expanding step was fixed to 1.0% and was not included in the operational parameters to be reconfigured. On the other hand, the reconfigured operational parameter of the U-press step was the U-press support final interval, and the reconfigured operational parameter of the O-press step was the O-press depression amount. In any case, the operational parameters after reconfiguration were reconfigured with a constraint to be within the range of the operational parameters set by the out-of-roundness offline calculation unit 112. Using the first example in which such out-of-roundness control is executed, 100 steel pipes were manufactured. As a result, when the out-of-roundness prediction model M was not used, the average value of the out-of-roundness was 7.9 mm, and the acceptance rate was 40%, whereas in the first example, the average value of the out-of-roundness was improved to 6.2 mm, and the acceptance rate was improved to 75%.

As a second example, similarly to the first example, the U-press step was set as a reconfiguration target step, and after the C-press step was completed and before shifting to the U-press step, the performance value of the yield stress, which is attribute information of the steel sheet, was used as the input of the out-of-roundness prediction model M, and the operational parameters of the U-press step the O-press step and the pipe expanding step were reconfigured. The operational parameter of the pipe expanding step to be reconfigured was the pipe expansion rate, and the reconfiguration was performed within a range of 0.6% to 1.3%. The other operational parameters to be reconfigured were similar to those of the first example. Using the second example in which such out-of-roundness control is executed, 100 steel pipes were manufactured. As a result, the average value of the out-of-roundness was 5.1 mm, and the acceptance rate was 90%, which were further improved.

### [Example 2]

In the present Example, an operational condition dataset including the following operational parameters was set in the basic data acquisition unit 110 illustrated in FIG. 10. A steel pipe to be a product after the pipe expanding step was a steel pipe of API grade X 80, pipe thickness of 25.4 mm × outer diameter of 558.8 mm. First, the attribute information of the steel sheet was set to a sheet thickness of 25.0 mm to 27.0 mm and a sheet width of 1662 mm, and the sheet thickness and the yield stress of the steel sheet were included in the operational condition dataset as the attribute information of the steel sheet so as to correspond to the steel sheet having a tensile strength of 600 MPa to 780 MPa. The sheet width was set to the sheet width obtained after the pretreatment step. As the operational parameters of the C-press step, the calculation condition for applying the end bending to the range of 135 mm from the end in the width direction as the end bending processing width was set with the curvature radius of the forming surface of the upper mold R 170 mm, but this condition was not included in the input of the out-of-roundness prediction model.

The operational parameters of the U-press step were set based on the U-press step by a Kaiser-type U-press device, and a corresponding finite element model of the U-press step was generated. Regarding the shape information of the U-press tool, the condition of a bottom R of 225 mm and a bottom R angle of φ 120 degrees, and a side r of 110 mm, was used to perform calculation and this condition was included in the operational condition dataset. In addition, regarding operational parameters in the U-press step, the U-press support final interval was varied in a range of 314 ± 30 mm, and the U-press depression amount was varied in a range of 706.4 ± 25.4 mm, and these conditions were also included in the operational condition dataset of the U-press step.

On the other hand, regarding the operational parameters of the O-press step, the upper and lower molds were set to have an O-press die radius R of 276 mm, the arc of the upper die was set to have a depth of 276 mm, and the arc of the lower die was set to have a depth of 264 mm. In addition, the calculation condition was changed so that the distance (O-press depression amount) between the uppermost point of the upper die and the lowermost point of the lower die was 578 ± 3 mm, and this condition was included in the operational condition dataset of the O-press step. Furthermore, in the present Example, as the operational parameter of the pipe expanding step, on the premise of a die having a shape of a pipe expanding die radius of 240 mm divided into 10 in the circumferential direction as a pipe expanding die, the pipe expansion rate was varied in a range of 0.4% to 1.6%, and this condition was included in the operational condition dataset of the pipe expanding step.

Regarding the welding step, numerical analysis was performed for the behavior of restraining the seam gap of the open pipe from the surroundings so as to set the seam gap of the open pipe to zero by the finite element method, and the result was set to the stress-strain state after the welding step. Specifically, a finite element analysis was performed on a behavior of disposing seven cage rolls at the seam gap portion and at positions of 38, 84, and 130 degrees from the seam gap portion with respect to the open pipe after the O-press step, and pushing the cage rolls until the cage rolls were inscribed in a circle having a diameter of 553.3 mm. However, there were no considerations of the thermal impact at the time of welding, and the stress-strain state of the open pipe in a state where the seam gap was zero after the cage roll was pushed was set as the stress-strain state of the steel pipe after the welding step, and data was transferred to the finite element model generation unit of the next pipe expanding step. As the out-of-roundness of the steel pipe after the pipe expanding step, which is the output of the out-of-roundness prediction model, the outer diameter shape of the steel pipe after the pipe expanding step acquired by the out-of-roundness offline calculation unit 112 was divided into 1080 points in the circumferential direction, and the difference between the maximum diameter Dmax and the minimum diameter Dmin was used.

As described above, the out-of-roundness prediction model of the steel pipe after the pipe expanding step according to the present Example includes the U-press support final interval and the U-press depression amount as the operational parameters of the U-press step, and includes the O-press depression amount as the operational parameters of the O-press step. Further, the sheet thickness and the yield stress were included in the operational condition dataset as the attribute information of the steel sheet, and the pipe expansion rate was included in the operational condition dataset as the operational parameter of the pipe expanding step. The data necessary for the finite element analysis of the forming processing step including such an operational condition dataset was provided to the out-of-roundness offline calculation unit 112 to calculate the out-of-roundness of the steel pipe after the pipe expanding step. The training dataset acquired by the calculation was accumulated in the database 120, and the out-of-roundness prediction model M was generated by the out-of-roundness prediction model generation unit 130.

The out-of-roundness offline calculation unit 112 has set two-dimensional plane strain elements obtained by dividing a steel sheet before the C-press step as a material into 720 in the width direction and 18 in the thickness direction, and performed finite element analysis in the order of the C-press step, the U-press step, the O-press step, the welding step, and the pipe expanding step. The finite element analysis solver used in the present Example was Abaqus 2019, and the calculation time per case was approximately three hours. The number of datasets accumulated in the database 120 was 500, and an ensemble model obtained by combining a neural network and a decision tree was used as a machine learning model. In the neural network, the intermediate layer was one layer, and the number of nodes was five each. The activation function used was a ReLU function. The hierarchy of the decision tree had a maximum depth of 3, and the maximum number of leaves in the generated decision tree was 160. The out-of-roundness prediction model M thus generated was installed on the system illustrated in FIG. 18 as an online model, and with the out-of-roundness target value set to 5 mm, the performance value of the yield stress of the steel sheet was acquired from the material inspection result in the thick sheet rolling step as the preceding step as the performance data of the attribute information of the steel sheet as the material from the host computer.

As a third example, first, the U-press step was set as a reconfiguration target step, and after the C-press step was completed and before shifting to the U-press step, the performance values of the sheet thickness and the yield stress, which are attribute information of the steel sheet, were used as the input of the out-of-roundness prediction model M, and the operational parameters of the U-press step and the O-press step were reconfigured. However, the set value of the operational condition of the pipe expanding step was fixed to 1.0% and was not included in the operational parameters to be reconfigured. On the other hand, the reconfigured operational parameter of the U-press step was the U-press support final interval, and the reconfigured operational parameter of the O-press step was the O-press depression amount. In any case, the operational parameters after reconfiguration were reconfigured with a constraint to be within the range of the operational parameters set by the out-of-roundness offline calculation unit 112. Using the third example in which such out-of-roundness control is executed, 100 steel pipes were manufactured. As a result, when the out-of-roundness prediction model M was not used, the average value of the out-of-roundness was 5.0 mm, and the acceptance rate was 60%, whereas in the third example, the average value of the out-of-roundness was improved to 4.1 mm, and the acceptance rate was improved to 81%.

As a fourth example, similarly to the third example, the U-press step was set as a reconfiguration target step, and after the C-press step was completed and before shifting to the U-press step, the performance values of the sheet thickness and the yield stress, which are attribute information of the steel sheet, were used as the input of the out-of-roundness prediction model M, and the operational parameters of the U-press step the O-press step and the pipe expanding step were reconfigured. The operational parameter of the pipe expanding step to be reconfigured was the pipe expansion rate, and the reconfiguration was performed within a range of 0.6% to 1.3%. The other operational parameters to be reconfigured were similar to those of the third example. Using the fourth example in which such out-of-roundness control is executed, 100 steel pipes were manufactured. As a result, the average value of the out-of-roundness was 2.6 mm, and the acceptance rate was 95%, which were further improved.

### [Example 3]

In the present Example, an operational condition dataset including the following operational parameters was set in the basic data acquisition unit 110 illustrated in FIG. 10. A steel pipe to be a product after the pipe expanding step was a steel pipe of API grade X 100, pipe thickness of 12.7 mm × outer diameter of 1219.2 mm. First, the attribute information of the steel sheet was set to a sheet thickness of 12.7 mm to 14.3 mm and a sheet width of 3760 mm, and the sheet thickness and the yield stress of the steel sheet were included in the operational condition dataset as the attribute information of the steel sheet so as to correspond to the steel sheet having a tensile strength of 720 MPa to 900 MPa. The sheet width was set to the sheet width obtained after the pretreatment step. As the operational parameters of the C-press step, the calculation condition of imparting the end bending to the range of 180 mm from the end in the width direction as the end bending processing width was set with the curvature radius of the forming surface of the upper mold R 310 mm, but this condition was not included in the input of the out-of-roundness prediction model.

The operational parameters of the U-press step were set based on the U-press step by a Kaiser-type U-press device, and a corresponding finite element model of the U-press step was generated. Regarding the shape information of the U-press tool, the condition of a bottom R of 1300 mm and a bottom R angle of φ 27 degrees, and a side r of 120 mm, was used to perform calculation and this condition was included in the operational condition dataset. In addition, regarding operational parameters in the U-press step, the U-press support final interval was varied in a range of 394 ± 40 mm, and the U-press depression amount was varied in a range of 858.8 ± 25.4 mm, and these conditions were also included in the operational condition dataset of the U-press step.

On the other hand, regarding the operational parameters of the O-press step, the upper and lower molds were set to have an O-press die radius R of 602 mm, the arc of the upper die was set to have a depth of 602 mm, and the arc of the lower die was set to have a depth of 590 mm. In addition, the calculation condition was changed so that the distance (O-press depression amount) between the uppermost point of the upper die and the lowermost point of the lower die was 1200 ± 5 mm, and this condition was included in the operational condition dataset of the O-press step. Furthermore, in the present Example, as the operational parameter of the pipe expanding step, on the premise of a die having a shape of a pipe expanding die radius of 545 mm divided into 12 in the circumferential direction as a pipe expanding die, the pipe expansion rate was varied in a range of 0.5% to 1.6%, and this condition was included in the operational condition dataset of the pipe expanding step.

Regarding the welding step, numerical analysis was performed for the behavior of restraining the seam gap of the open pipe from the surroundings so as to set the seam gap of the open pipe to zero by the finite element method, and the result was set to the stress-strain state after the welding step. Specifically, a finite element analysis was performed on a behavior of disposing nine cage rolls at the seam gap portion and at positions of 22, 70, 105, and 150 degrees from the seam gap portion with respect to the open pipe after the O-press step, and pushing the cage rolls until the cage rolls were inscribed in a circle having a diameter of 1270.1 mm. However, there were no considerations of the thermal impact at the time of welding, and the stress-strain state of the open pipe in a state where the seam gap was zero after the cage roll was pushed was set as the stress-strain state of the steel pipe after the welding step, and data was transferred to the finite element model generation unit of the next pipe expanding step. As the out-of-roundness of the steel pipe after the pipe expanding step, which is the output of the out-of-roundness prediction model, the outer diameter shape of the steel pipe after the pipe expanding step acquired by the out-of-roundness offline calculation unit 112 was divided into 1080 points in the circumferential direction, and the difference between the maximum diameter Dmax and the minimum diameter Dmin was used.

As described above, the out-of-roundness prediction model of the steel pipe after the pipe expanding step according to the present Example includes the U-press support final interval and the U-press depression amount as the operational parameters of the U-press step, and includes the O-press depression amount as the operational parameters of the O-press step. Further, the sheet thickness and the yield stress were included in the operational condition dataset as the attribute information of the steel sheet, and the pipe expansion rate was included in the operational condition dataset as the operational parameter of the pipe expanding step. The data necessary for the finite element analysis of the forming processing step including such an operational condition dataset was provided to the out-of-roundness offline calculation unit 112 to calculate the out-of-roundness of the steel pipe after the pipe expanding step. The training dataset acquired by the calculation was accumulated in the database 120, and the out-of-roundness prediction model M was generated by the out-of-roundness prediction model generation unit 130.

The out-of-roundness offline calculation unit 112 has set two-dimensional plane strain elements obtained by dividing a steel sheet before the C-press step as a material into 720 in the width direction and 18 in the thickness direction, and performed finite element analysis in the order of the C-press step, the U-press step, the O-press step, the welding step, and the pipe expanding step. The finite element analysis solver used in the present Example was Abaqus 2019, and the calculation time per case was approximately three hours. The number of datasets accumulated in the database 120 was 400, and a method used as a machine learning model was gradient boosting, which is a type of ensemble learning using a decision tree. The number of decision trees constituting a gradient boosting decision tree was set to 10, the maximum depth of the hierarchy was 5, and the maximum number of leaves in a decision tree to be generated was 180. The out-of-roundness prediction model M thus generated was installed on the system illustrated in FIG. 18 as an online model, and with the out-of-roundness target value set to 10 mm, the performance value of the yield stress of the steel sheet was acquired from the material inspection result in the thick sheet rolling step as the preceding step as the performance data of the attribute information of the steel sheet as the material from the host computer.

As a fifth example, first, the U-press step was set as a reconfiguration target step, and after the C-press step was completed and before shifting to the U-press step, the performance values of the sheet thickness and the yield stress, which are attribute information of the steel sheet, were used as the input of the out-of-roundness prediction model M, and the operational parameters of the U-press step and the O-press step were reconfigured. However, the set value of the operational condition of the pipe expanding step was fixed to 1.2% and was not included in the operational parameters to be reconfigured. On the other hand, the reconfigured operational parameter of the U-press step was the U-press support final interval, and the reconfigured operational parameter of the O-press step was the O-press depression amount. In any case, the operational parameters after reconfiguration were reconfigured with a constraint to be within the range of the operational parameters set by the out-of-roundness offline calculation unit 112. Using the fifth example in which such out-of-roundness control is executed, 100 steel pipes were manufactured. As a result, when the out-of-roundness prediction model M was not used, the average value of the out-of-roundness was 10.5 mm, and the acceptance rate was 20%, whereas in the fifth example, the average value of the out-of-roundness was improved to 6.3 mm, and the acceptance rate was improved to 69%.

As a sixth example, similarly to the fifth example, the U-press step was set as a reconfiguration target step, and after the C-press step was completed and before shifting to the U-press step, the performance values of the sheet thickness and the yield stress, which are attribute information of the steel sheet, were used as the input of the out-of-roundness prediction model M, and the operational parameters of the U-press step the O-press step and the pipe expanding step were reconfigured. The operational parameter of the pipe expanding step to be reconfigured was the pipe expansion rate, and the reconfiguration was performed within a range of 0.9% to 1.5%. The other operational parameters to be reconfigured were similar to those of the fifth example. Using the sixth example in which such out-of-roundness control is executed, 100 steel pipes were manufactured. As a result, the average value of the out-of-roundness was 5.1 mm, and the acceptance rate was 92%, which were further improved.

### [Example 4]

In the present Example, an operational condition dataset including the following operational parameters was set in the basic data acquisition unit 110 illustrated in FIG. 10. A steel pipe to be a product after the pipe expanding step was a steel pipe of API grade X 42, pipe thickness of 44.5 mm × outer diameter of 1422.4 mm. First, the attribute information of the steel sheet was set to a sheet thickness of 45.6 mm and a sheet width of 4295 mm, and the yield stress was included in the operational condition dataset as the attribute information of the steel sheet so as to correspond to the steel sheet having a tensile strength of 500 MPa. The sheet width was set to the sheet width obtained after the pretreatment step. As the operational parameters of the C-press step, the calculation condition for applying the end bending to the range of 300 mm from the end in the width direction as the end bending processing width was set with the curvature radius of the forming surface of the upper mold R 420 mm, but this condition was not included in the input of the out-of-roundness prediction model.

The operational parameters of the U-press step were set based on the U-press step by a Kaiser-type U-press device, and a corresponding finite element model of the U-press step was generated. Regarding the shape information of the U-press tool, calculation corresponding to a plurality of pieces of shape information was performed using the range of the bottom R of 501 mm to 552 mm, the bottom R angle φ of 120 degrees, and the side r of 200 mm to 300 mm, and this was included in the operational condition dataset. In addition, regarding operational parameters in the U-press step, the U-press support final interval was varied in a range of 914 ± 80 mm, and the U-press depression amount was varied in a range of 858.8 ± 25.4 mm, and these conditions were also included in the operational condition dataset of the U-press step.

On the other hand, regarding the operational parameters of the O-press step, the upper and lower molds were set to have an O-press die radius R of 702 mm, the arc of the upper die was set to have a depth of 702 mm, and the arc of the lower die was set to have a depth of 683 mm. In addition, the calculation condition was changed so that the distance (O-press depression amount) between the uppermost point of the upper die and the lowermost point of the lower die was 1415 ± 5 mm, and this condition was included in the operational condition dataset of the O-press step. In the present Example, regarding the pipe expanding step, on the premise of a die having a shape with a pipe expanding die radius of 620 mm divided into 12 in the circumferential direction as a pipe expanding die, the pipe expansion rate was set to 0.9% as a condition.

Regarding the welding step, numerical analysis was performed for the behavior of restraining the seam gap of the open pipe from the surroundings so as to set the seam gap of the open pipe to zero by the finite element method, and the result was set to the stress-strain state after the welding step. Specifically, a finite element analysis was performed on a behavior of disposing nine cage rolls at the seam gap portion and at positions of 19, 70, 105, and 154 degrees from the seam gap portion with respect to the open pipe after the O-press step, and pushing the cage rolls until the cage rolls were inscribed in a circle having a diameter of 1408.3 mm. However, there were no considerations of the thermal impact at the time of welding, and the stress-strain state of the open pipe in a state where the seam gap was zero after the cage roll was pushed was set as the stress-strain state of the steel pipe after the welding step, and data was transferred to the finite element model generation unit of the next pipe expanding step. As the out-of-roundness of the steel pipe after the pipe expanding step, which is the output of the out-of-roundness prediction model, the outer diameter shape of the steel pipe after the pipe expanding step acquired by the out-of-roundness offline calculation unit 112 was divided into 1080 points in the circumferential direction, and the difference between the maximum diameter Dmax and the minimum diameter Dmin was used.

As described above, the out-of-roundness prediction model of the steel pipe after the pipe expanding step according to the present Example includes the U-press tool shape information, the U-press support final interval and the U-press depression amount as the operational parameters of the U-press step, and includes the O-press depression amount as the operational parameters of the O-press step. The data necessary for the finite element analysis of the forming processing step including such an operational condition dataset was provided to the out-of-roundness offline calculation unit 112 to calculate the out-of-roundness of the steel pipe after the pipe expanding step. The training dataset acquired by the calculation was accumulated in the database 120, and the out-of-roundness prediction model M was generated by the out-of-roundness prediction model generation unit 130.

The out-of-roundness offline calculation unit 112 has set two-dimensional plane strain elements obtained by dividing a steel sheet before the C-press step as a material into 720 in the width direction and 18 in the thickness direction, and performed finite element analysis in the order of the C-press step, the U-press step, the O-press step, the welding step, and the pipe expanding step. The finite element analysis solver used in the present Example was Abaqus 2019, and the calculation time per case was approximately three hours. When 300 pieces of data were accumulated in the database 120, the out-of-roundness prediction model M was generated. The out-of-roundness prediction model M is a machine learning model having inputs including an operational parameter of the U-press step and an operational parameter of the O-press step. The machine learning model used was Gaussian process regression, and the kernel function used included a Radial Basis Function kernel (RBF kernel) for evaluating similarity between variables and a white kernel for functionalizing the impact of noise of an objective variable.

The out-of-roundness prediction model M generated as described above was used for the online processing in the manufacturing step of the steel pipe to predict the out-of-roundness of the steel pipe after the pipe expanding step after the end of the O-press step. The out-of-roundness prediction of the steel pipe after the pipe expanding step targeted the steel pipe satisfying the above manufacturing conditions, and information acquired as the operational performance data of the manufacturing step of the steel pipe was shape information of the U-press tool, the U-press support portion final interval, the U-press depression amount, and the O-press depression amount, so as to generate the operational condition dataset to be the input to the out-of-roundness prediction model M. Then, a predicted value of the out-of-roundness of the steel pipe after the pipe expanding step was calculated as an output of the out-of-roundness prediction model M, and the value was compared with a performance value of the out-of-roundness of the steel pipe after the pipe expanding step (out-of-roundness performance value). As a result, the difference between the out-of-roundness predicted value output by the out-of-roundness prediction model M and the out-of-roundness performance value was an error average of 0.3%, and the standard deviation of the error was 4.3%, leading to confirmation of capability of predicting the out-of-roundness after the pipe expanding step with high accuracy by the out-of-roundness prediction model M.

### [Example 5]

In the present Example, an operational condition dataset including the following operational parameters was set in the basic data acquisition unit 110 illustrated in FIG. 10. A steel pipe to be a product after the pipe expanding step was a steel pipe of API grade X 52, pipe thickness of 6.4 mm × outer diameter of 508.0 mm. First, the attribute information of the steel sheet was set to a sheet thickness of 6.4 mm to 7.4 mm and a sheet width of 1564 mm, and the sheet thickness and the yield stress of the steel sheet were included in the operational condition dataset as the attribute information of the steel sheet so as to correspond to the steel sheet having a tensile strength of 440 MPa to 640 MPa. The sheet width was set to the sheet width obtained after the pretreatment step. The present Example targeted a step of manufacturing a steel pipe by performing a U-press step, an O-press step, a welding step, and a pipe expanding step on a steel sheet as a material. That is, a steel pipe was manufactured without performing end bending processing of the C-press step.

The operational parameters of the U-press step were set based on the U-press step by a Kaiser-type U-press device, and a corresponding finite element model of the U-press step was generated. Calculation was performed under the condition of a bottom R of 210 mm, a bottom R angle φ of 120 degrees, and a side r of 131 mm regarding the shape information of the U-press tool. In addition, regarding operational parameters in the U-press step, the U-press support final interval was varied in a range of 154 ± 30 mm, and the U-press depression amount was varied in a range of 656.6 ± 25.4 mm, and these conditions were included in the operational condition dataset of the U-press step.

On the other hand, regarding the operational parameters of the O-press step, the upper and lower molds were set to have an O-press die radius R of 251 mm, the arc of the upper die was set to have a depth of 251 mm, and the arc of the lower die was set to have a depth of 239 mm. In addition, the calculation condition was changed so that the distance (O-press depression amount) between the uppermost point of the upper die and the lowermost point of the lower die was 501 ± 3 mm, and this condition was included in the operational condition dataset of the O-press step. In the present Example, as an operational parameter of the pipe expanding step, a condition of the pipe expansion rate 1.1% was set on the premise of a die having a shape of a pipe expanding die radius of 226 mm divided into 10 in the circumferential direction as a pipe expanding die.

Regarding the welding step, numerical analysis was performed for the behavior of restraining the seam gap of the open pipe from the surroundings so as to set the seam gap of the open pipe to zero by the finite element method, and the result was set to the stress-strain state after the welding step. Specifically, a finite element analysis was performed on a behavior of disposing seven cage rolls at the seam gap portion and at positions of 42, 84, and 126 degrees from the seam gap portion with respect to the open pipe after the O-press step, and pushing the cage rolls until the cage rolls were inscribed in a circle having a diameter of 503.0 mm. However, there were no considerations of the thermal impact at the time of welding, and the stress-strain state of the open pipe in a state where the seam gap was zero after the cage roll was pushed was set as the stress-strain state of the steel pipe after the welding step, and data was transferred to the finite element model generation unit of the next pipe expanding step. As the out-of-roundness of the steel pipe after the pipe expanding step, which is the output of the out-of-roundness prediction model, the outer diameter shape of the steel pipe after the pipe expanding step acquired by the out-of-roundness offline calculation unit 112 was divided into 1080 points in the circumferential direction, and the difference between the maximum diameter Dmax and the minimum diameter Dmin was used.

As described above, the out-of-roundness prediction model of the steel pipe after the pipe expanding step according to the present Example includes the U-press support final interval and the U-press depression amount as the operational parameters of the U-press step, and includes the O-press depression amount as the operational parameters of the O-press step. Further, the sheet thickness and the yield stress were included in the operational condition dataset as the attribute information of the steel sheet. The data necessary for the finite element analysis of the forming processing step including such an operational condition dataset was provided to the out-of-roundness offline calculation unit 112 to calculate the out-of-roundness of the steel pipe after the pipe expanding step. The training dataset acquired by the calculation was accumulated in the database 120, and the out-of-roundness prediction model M was generated by the out-of-roundness prediction model generation unit 130.

The out-of-roundness offline calculation unit 112 has set two-dimensional plane strain elements obtained by dividing a steel sheet as a material into 720 in the width direction and 18 in the thickness direction, and performed finite element analysis in the order of the U-press step, the O-press step, the welding step, and the pipe expanding step. The finite element analysis solver used in the present Example was Abaqus 2019, and the calculation time per case was approximately three hours. When 250 pieces of data were accumulated in the database 120, the out-of-roundness prediction model M was generated. The out-of-roundness prediction model M is a machine learning model having inputs including attribute information of a steel sheet, an operational parameter of a U-press step, and an operational parameter of an O-press step. Support vector regression was used for the machine learning model, and a sigmoid kernel was used for a kernel function.

The out-of-roundness prediction model M generated as described above was used for the online processing in the manufacturing step of the steel pipe to predict the out-of-roundness of the steel pipe after the pipe expanding step after the end of the O-press step. The out-of-roundness prediction of the steel pipe after the pipe expanding step targeted the steel pipe satisfying the above manufacturing conditions, and information acquired as the operational performance data of the manufacturing step of the steel pipe was the sheet thickness of the steel sheet, yield stress, the U-press support portion final interval, the U-press depression amount, and the O-press depression amount, so as to generate the operational condition dataset to be the input to the out-of-roundness prediction model M. Then, a predicted value of the out-of-roundness of the steel pipe after the pipe expanding step was calculated as an output of the out-of-roundness prediction model M, and the value was compared with a performance value of the out-of-roundness of the steel pipe after the pipe expanding step (out-of-roundness performance value). As a result, the difference between the out-of-roundness predicted value output by the out-of-roundness prediction model M and the out-of-roundness performance value was an error average of 0.2%, and the standard deviation of the error was 4.6%, leading to confirmation of capability of predicting the out-of-roundness after the pipe expanding step with high accuracy by the out-of-roundness prediction model M.

### [Example 6]

In the present Example, an operational condition dataset including the following operational parameters was set in the basic data acquisition unit 110 illustrated in FIG. 10. A steel pipe to be a product after the pipe expanding step was a steel pipe of API grade X 65, pipe thickness of 44.5 mm × outer diameter of 914.4 mm. First, the attribute information of the steel sheet was set to a sheet thickness of 44.5 mm and a sheet width of 2711 mm, and the yield stress was included in the operational condition dataset as the attribute information of the steel sheet so as to correspond to the steel sheet having a tensile strength of 520 MPa to 690 MPa. The sheet width was set to the sheet width obtained after the pretreatment step. As the operational parameters of the C-press step, the calculation condition for applying the end bending to the range of 195 mm from the end in the width direction as the end bending processing width was set with the curvature radius of the forming surface of the upper mold R 310 mm, but this condition was not included in the input of the out-of-roundness prediction model.

The operational parameters of the U-press step were set based on the U-press step by a Kaiser-type U-press device, and a corresponding finite element model of the U-press step was generated. Calculation was performed under the condition of a bottom R of 310 mm, a bottom R angle φ of 120 degrees, and a side r of 178 mm regarding the shape information of the U-press tool. In addition, regarding operational parameters in the U-press step, the U-press support final interval was varied in a range of 634 ± 40 mm, and the U-press depression amount was varied in a range of 782.6 ± 25.4 mm, and these conditions were included in the operational condition dataset of the U-press step.

On the other hand, regarding the operational parameters of the O-press step, the upper and lower molds were set to have an O-press die radius R of 451 mm, the arc of the upper die was set to have a depth of 451 mm, and the arc of the lower die was set to have a depth of 438 mm. In addition, the calculation condition was changed so that the distance (O-press depression amount) between the uppermost point of the upper die and the lowermost point of the lower die was 903 ± 4 mm, and this was included in the operational condition dataset of the O-press step. Furthermore, in the present Example, as the operational parameters of the pipe expanding step, on the premise of two types of dies having a pipe expanding die radius of 390 mm and 410 mm divided into 12 in the circumferential direction as pipe expanding dies, the pipe expansion rate was varied in a range of 0.5% to 1.1%, and this condition was included in the operational condition dataset of the pipe expanding step.

Regarding the welding step, numerical analysis was performed for the behavior of restraining the seam gap of the open pipe from the surroundings so as to set the seam gap of the open pipe to zero by the finite element method, and the result was set to the stress-strain state after the welding step. Specifically, a finite element analysis was performed on a behavior of disposing nine cage rolls at the seam gap portion and at positions of 24, 65, 105, and 148 degrees from the seam gap portion with respect to the open pipe after the O-press step, and pushing the cage rolls until the cage rolls were inscribed in a circle having a diameter of 905.3 mm. However, there were no considerations of the thermal impact at the time of welding, and the stress-strain state of the open pipe in a state where the seam gap was zero after the cage roll was pushed was set as the stress-strain state of the steel pipe after the welding step, and data was transferred to the finite element model generation unit of the next pipe expanding step. As the out-of-roundness of the steel pipe after the pipe expanding step, which is the output of the out-of-roundness prediction model, the outer diameter shape of the steel pipe after the pipe expanding step acquired by the out-of-roundness offline calculation unit 112 was divided into 1080 points in the circumferential direction, and the difference between the maximum diameter Dmax and the minimum diameter Dmin was used.

As described above, the out-of-roundness prediction model of the steel pipe after the pipe expanding step according to the present Example includes the U-press support final interval and the U-press depression amount as the operational parameters of the U-press step, and includes the O-press depression amount as the operational parameters of the O-press step. Further, the yield stress was included in the operational condition dataset as the attribute information of the steel sheet, and the pipe expanding die radius and the pipe expansion rate were included in the operational condition dataset as the operational parameters of the pipe expanding step. The data necessary for the finite element analysis of the forming processing step including such an operational condition dataset was provided to the out-of-roundness offline calculation unit 112 to calculate the out-of-roundness of the steel pipe after the pipe expanding step. The training dataset acquired by the calculation was accumulated in the database 120, and the out-of-roundness prediction model M was generated by the out-of-roundness prediction model generation unit 130.

The out-of-roundness offline calculation unit 112 has set two-dimensional plane strain elements obtained by dividing a steel sheet before the C-press step as a material into 720 in the width direction and 18 in the thickness direction, and performed finite element analysis in the order of the C-press step, the U-press step, the O-press step, the welding step, and the pipe expanding step. The finite element analysis solver used in the present Example was Abaqus 2019, and the calculation time per case was approximately three hours. When 300 pieces of data were accumulated in the database 120, the out-of-roundness prediction model M was generated. The out-of-roundness prediction model M is a machine learning model having inputs including attribute information of the steel sheet, an operational parameter of the U-press step, an operational parameter of the O-press step, and an operational parameter of the pipe expanding step. The machine learning model used was random forest, the maximum depth of hierarchy in the decision tree was 3, and the maximum number of leaves in the generated decision tree was 220.

The out-of-roundness prediction model M generated as described above was used for the online processing in the manufacturing step of the steel pipe to predict the out-of-roundness of the steel pipe after the pipe expanding step after the end of the O-press step. The out-of-roundness prediction of the steel pipe after the pipe expanding step targeted the steel pipe satisfying the above manufacturing conditions, and information acquired as the operational performance data of the manufacturing step of the steel pipe was the yield stress of the steel sheet, the U-press support portion final interval, the U-press depression amount, and the O-press depression amount. In addition, set values of the pipe expanding die radius and the pipe expansion rate which are operational parameters of the pipe expanding step were acquired from the control computer, so as to generate an operational condition dataset to be an input to the out-of-roundness prediction model M. Then, a predicted value of the out-of-roundness of the steel pipe after the pipe expanding step was calculated as an output of the out-of-roundness prediction model M, and the value was compared with a performance value of the out-of-roundness of the steel pipe after the pipe expanding step (out-of-roundness performance value). As a result, the difference between the out-of-roundness predicted value output by the out-of-roundness prediction model M and the out-of-roundness performance value was an error average of 0.4%, and the standard deviation of the error was 4.0%, leading to confirmation of capability of predicting the out-of-roundness after the pipe expanding step with high accuracy by the out-of-roundness prediction model M.

### [Example 7]

In the present Example, an operational condition dataset including the following operational parameters was set in the basic data acquisition unit 110 illustrated in FIG. 10. A steel pipe to be a product after the pipe expanding step was a steel pipe of API grade X 42, pipe thickness of 44.5 mm × outer diameter of 609.6 mm. First, the attribute information of the steel sheet was set to a sheet thickness of 44.5 mm and a sheet width of 1761 mm, and the yield stress was included in the operational condition dataset as the attribute information of the steel sheet so as to correspond to the steel sheet having a tensile strength of 400 MPa to 600 MPa. The sheet width was set to the sheet width obtained after the pretreatment step. As the operational parameters of the C-press step, the calculation condition for applying the end bending to the range of 120 mm to 140 mm from the end in the width direction as the end bending processing width was set with the curvature radius of the forming surface of the upper mold R 190 mm, and this condition was included in the operational condition dataset.

The operational parameters of the U-press step were set based on the U-press step by a Kaiser-type U-press device, and a corresponding finite element model of the U-press step was generated. Calculation was performed under the condition of a bottom R of 246 mm, a bottom R angle φ of 120 degrees, and a side r of 160 mm regarding the shape information of the U-press tool. In addition, regarding operational parameters in the U-press step, the U-press support final interval was varied in a range of 474 ± 30 mm, and the U-press depression amount was varied in a range of 757.2 ± 12.7 mm, and these conditions were included in the operational condition dataset of the U-press step.

On the other hand, regarding the operational parameters of the O-press step, the upper and lower molds were set to have an O-press die radius R of 301 mm, the arc of the upper die was set to have a depth of 301 mm, and the arc of the lower die was set to have a depth of 289 mm. In addition, the calculation condition was changed so that the distance (O-press depression amount) between the uppermost point of the upper die and the lowermost point of the lower die was 602 ± 4 mm, and this condition was included in the operational condition dataset of the O-press step. Furthermore, in the present Example, as the operational parameter of the pipe expanding step, on the premise of a die having a shape of a pipe expanding die radius of 254 mm divided into 10 in the circumferential direction as a pipe expanding die, the pipe expansion rate was varied in a range of 0.6% to 1.4%, and this condition was included in the operational condition dataset of the pipe expanding step.

Regarding the welding step, numerical analysis was performed for the behavior of restraining the seam gap of the open pipe from the surroundings so as to set the seam gap of the open pipe to zero by the finite element method, and the result was set to the stress-strain state after the welding step. Specifically, a finite element analysis was performed on a behavior of disposing seven cage rolls at the seam gap portion and at positions of 36, 84, and 132 degrees from the seam gap portion with respect to the open pipe after the O-press step, and pushing the cage rolls until the cage rolls were inscribed in a circle having a diameter of 905.3 mm. However, there were no considerations of the thermal impact at the time of welding, and the stress-strain state of the open pipe in a state where the seam gap was zero after the cage roll was pushed was set as the stress-strain state of the steel pipe after the welding step, and data was transferred to the finite element model generation unit of the next pipe expanding step. As the out-of-roundness of the steel pipe after the pipe expanding step, which is the output of the out-of-roundness prediction model, the outer diameter shape of the steel pipe after the pipe expanding step acquired by the out-of-roundness offline calculation unit 112 was divided into 1080 points in the circumferential direction, and the difference between the maximum diameter Dmax and the minimum diameter Dmin was used.

As described above, the out-of-roundness prediction model of the steel pipe after the pipe expanding step according to the present Example includes the U-press support final interval and the U-press depression amount as the operational parameters of the U-press step, and includes the O-press depression amount as the operational parameters of the O-press step. In addition, the yield stress was included, as the attribute information of the steel sheet, in the operational condition dataset, and the end bending processing width was included as the operational parameter of the C-press step. Further, the pipe expansion rate was included in the operational condition dataset as the operational parameter of the pipe expanding step. The data necessary for the finite element analysis of the forming processing step including such an operational condition dataset was provided to the out-of-roundness offline calculation unit 112 to calculate the out-of-roundness of the steel pipe after the pipe expanding step. The training dataset acquired by the calculation was accumulated in the database 120, and the out-of-roundness prediction model M was generated by the out-of-roundness prediction model generation unit 130.

The out-of-roundness offline calculation unit 112 has set two-dimensional plane strain elements obtained by dividing a steel sheet before the C-press step as a material into 720 in the width direction and 18 in the thickness direction, and performed finite element analysis in the order of the C-press step, the U-press step, the O-press step, the welding step, and the pipe expanding step. The finite element analysis solver used in the present Example was Abaqus 2019, and the calculation time per case was approximately three hours. When 500 pieces of data were accumulated in the database 120, the out-of-roundness prediction model M was generated. The out-of-roundness prediction model M is a machine learning model having inputs including attribute information of the steel sheet, an operational parameter of the C-press step, an operational parameter of the U-press step, an operational parameter of the O-press step, and an operational parameter of the pipe expanding step. Gaussian process regression using a radial basis function as a basis function was used as a machine learning model.

The out-of-roundness prediction model M generated as described above was used for the online processing in the manufacturing step of the steel pipe to predict the out-of-roundness of the steel pipe after the pipe expanding step after the end of the O-press step. The out-of-roundness prediction of the steel pipe after the pipe expanding step targeted the steel pipe satisfying the above manufacturing conditions, and information acquired as the operational performance data of the manufacturing step of the steel pipe was the yield stress of the steel sheet, the end bending processing width of the C-press step, the U-press support portion final interval, the U-press depression amount, and the O-press depression amount. In addition, the set values of the pipe expansion rate which is an operational parameter of the pipe expanding step were acquired from the control computer, so as to generate an operational condition dataset to be an input to the out-of-roundness prediction model M. Then, a predicted value of the out-of-roundness of the steel pipe after the pipe expanding step was calculated as an output of the out-of-roundness prediction model M, and the value was compared with a performance value of the out-of-roundness of the steel pipe after the pipe expanding step (out-of-roundness performance value). As a result, the difference between the out-of-roundness predicted value output by the out-of-roundness prediction model M and the out-of-roundness performance value was an error average of 0.2%, and the standard deviation of the error was 5.0%, leading to confirmation of capability of predicting the out-of-roundness after the pipe expanding step with high accuracy by the out-of-roundness prediction model M.

The above has described the embodiments as application of the invention made by the present inventors, in which the present invention is not limited by the description and drawings constituting a part of the disclosure of the present invention according to the present embodiments. That is, other embodiments, implementation examples, operational techniques, and the like made by those skilled in the art based on the present embodiment are all included in the scope of the present invention.

### Industrial Applicability

According to the present invention, it is possible to provide a steel pipe out-of-roundness prediction model generation method capable of generating an out-of-roundness prediction model that accurately predicts the out-of-roundness of a steel pipe after a pipe expanding step in a UOE steel pipe manufacturing process including a plurality of steps. According to the present invention, it is possible to provide a steel pipe out-of-roundness prediction method and a steel pipe out-of-roundness prediction device capable of accurately predicting the out-of-roundness of the steel pipe after the pipe expanding step in the UOE steel pipe manufacturing process including a plurality of steps. According to the present invention, it is also possible to provide a steel pipe out-of-roundness control method and a steel pipe manufacturing method capable of manufacturing a UOE steel pipe having satisfactory out-of-roundness.

### Reference Signs List

- 10: C-PRESS DEVICE
- 11: CONVEYANCE MECHANISM
- 12A, 12B: PRESS MECHANISM
- 13: UPPER MOLD
- 13a: FORMING SURFACE
- 14: LOWER MOLD
- 14a: PRESSING SURFACE
- 15: TOOL HOLDER
- 16: HYDRAULIC CYLINDER
- 17: CLAMP MECHANISM
- 20: MACHINE FRAME
- 21: LIFTING CYLINDER
- 22, 37: U-PRESS TOOL (U PUNCH)
- 23: HANGING MEMBER
- 24: LOWER FLOOR SURFACE
- 25: ROD
- 26: SLIDING CYLINDER
- 27: SLIDING BLOCK
- 28: SADDLE (PEDESTAL)
- 29: LINK
- 30: PIVOT CENTER
- 31: ARM
- 32: BRAKE ROLL
- 33: SADDLE PORTION
- 34: U-BEND SUPPORT PORTION
- 35: LOWER MOLD (LOCKER DIE)
- 36: ROTATION FULCRUM
- 38: CUSHION
- 40: LOWER DIE
- 41: UPPER DIE
- 51: PIPE EXPANDING DIE
- 52: TAPERED OUTER CIRCUMFERENTIAL SURFACE
- 53: PULL ROD
- 60: ARM
- 61a, 61b: DISPLACEMENT METER
- 62: ROTATION ANGLE DETECTOR
- 63: ROTATING ARM
- 64a, 64b: PRESSING ROLLER
- 100: STEEL PIPE OUT-OF-ROUNDNESS PREDICTION MODEL GENERATION DEVICE
- 110: BASIC DATA ACQUISITION UNIT
- 111: OPERATIONAL CONDITION DATASET
- 112: OUT-OF-ROUNDNESS OFFLINE CALCULATION UNIT
- 112a to 112c: FINITE ELEMENT MODEL GENERATION UNIT
- 112d: FINITE ELEMENT ANALYSIS SOLVER
- 120: DATABASE
- 130: OUT-OF-ROUNDNESS PREDICTION MODEL GENERATION UNIT
- 140: OPERATIONAL CONDITION RECONFIGURATION UNIT
- 150: HOST COMPUTER
- 160: STEEL PIPE OUT-OF-ROUNDNESS PREDICTION DEVICE
- 161: OPERATIONAL PARAMETER ACQUISITION UNIT
- 162: STORAGE UNIT
- 163: OUT-OF-ROUNDNESS PREDICTION UNIT
- 164: OUTPUT UNIT
- 165: INPUT UNIT
- 166: DISPLAY UNIT
- P: STEEL PIPE
- S: STEEL SHEET

## Claims

1. A steel pipe out-of-roundness prediction model generation method, which is a method of generating an out-of-roundness prediction model that predicts an out-of-roundness of a steel pipe after a pipe expanding step, among a steel pipe manufacturing process including: a U-press step of performing forming processing on a steel sheet to be formed into a formed body having a U-shaped cross section using a U-press tool; an O-press step of performing forming processing on the formed body having the U-shaped cross section to be formed into an open pipe; and the pipe expanding step of performing forming processing, by pipe expansion, on a steel pipe obtained by joining ends of the open pipe in a width direction to each other,
the method comprising:
a basic data acquisition step of executing a numerical computation in which an input data is an operational condition dataset including one or more operational parameters selected from operational parameters of the U-press step and one or more operational parameters selected from operational parameters of the O-press step, and an output data is out-of-roundness information of the steel pipe after the pipe expanding step, the execution of the numerical computation being conducted a plurality of times while changing the operational condition dataset, and generating, by the executing of the numerical computation, a plurality of pairs of data of the operational condition data set and the out-of-roundness information data of the steel pipe after the pipe expanding step corresponding to the operational condition dataset, as training data; and
an out-of-roundness prediction model generation step of generating an out-of-roundness prediction model for which an input data is the operational condition dataset and an output data is the out-of-roundness information of the steel pipe after the pipe expanding step, the generation of the out-of-roundness prediction model performed by machine learning using the plurality of pairs of training data generated in the basic data acquisition step.

2. The steel pipe out-of-roundness prediction model generation method according to claim 1,
wherein the basic data acquisition step includes a step of calculating, by using a finite element method, the out-of-roundness information of the steel pipe after the pipe expanding step from the operational condition dataset.

3. The steel pipe out-of-roundness prediction model generation method according to claim 1 or 2,
wherein the out-of-roundness prediction model includes one or more parameters selected from attribute information of the steel sheet, as the operational condition dataset.

4. The steel pipe out-of-roundness prediction model generation method according to any one of claims 1 to 3,
wherein the out-of-roundness prediction model includes one or more operational parameters selected from the operational parameters of the pipe expanding step, as the operational condition dataset.

5. The steel pipe out-of-roundness prediction model generation method according to any one of claims 1 to 4, wherein the steel pipe manufacturing process includes a C-press step of performing forming processing on an end of the steel sheet in a width direction using end bending prior to the U-press step, and the out-of-roundness prediction model includes, as the operational condition dataset, one or more operational parameters selected from the operational parameters of the C-press step.

6. The steel pipe out-of-roundness prediction model generation method according to any one of claims 1 to 5, wherein the operational parameters of the U-press step include one or more operational parameters out of shape information of the U-press tool, a U-press depression amount, a U-press support initial interval, and a U-press support final interval.

7. The steel pipe out-of-roundness prediction model generation method according to any one of claims 1 to 6,
wherein the machine learning to be used is a type of machine learning selected from a neural network, decision tree learning, random forest, Gaussian process regression, and support vector regression.

8. A steel pipe out-of-roundness prediction method comprising:
an operational parameter acquisition step of acquiring online an operational condition dataset to be set as an operational condition of the steel pipe manufacturing process, as an input of the steel pipe out-of-roundness prediction model generated by the steel pipe out-of-roundness prediction model generation method according to any one of claims 1 to 7; and
an out-of-roundness prediction step of predicting out-of-roundness information of a steel pipe after a pipe expanding step by inputting, to the out-of-roundness prediction model, the operational condition dataset acquired in the operational parameter acquisition step.

9. A steel pipe out-of-roundness control method comprising a reconfiguring step of predicting out-of-roundness information of the steel pipe after the pipe expanding step using the steel pipe out-of-roundness prediction method according to claim 8, the prediction being performed before starting a reconfiguration target step which is selected from a plurality of forming processing steps constituting the steel pipe manufacturing process, and reconfiguring one or more operational parameters selected from at least operational parameters of the reconfiguration target step or one or more operational parameters selected from operational parameters of a forming processing step on a downstream side of the reconfiguration target step, based on the predicted out-of-roundness information of the steel pipe.

10. A steel pipe manufacturing method comprising a step of manufacturing a steel pipe using the steel pipe out-of-roundness control method according to claim 9.

11. A steel pipe out-of-roundness prediction device, which predicts an out-of-roundness of a steel pipe after a pipe expanding step, among a steel pipe manufacturing process including: a U-press step of processing a steel sheet into a formed body having a U-shaped cross section using a U-press tool; an O-press step of processing the formed body having the U-shaped cross section into an open pipe; and the pipe expanding step of performing forming processing, by pipe expansion, on a steel pipe obtained by joining ends of the open pipe in a width direction to each other,
the steel pipe out-of-roundness prediction device comprising:
a basic data acquisition unit that
executes a numerical computation in which an input data is an operational condition dataset including one or more operational parameters selected from operational parameters of the U-press step and one or more operational parameters selected from operational parameters of the O-press step, and an output data is out-of-roundness information of the steel pipe after the pipe expanding step, the execution of the numerical computation being conducted a plurality of times while changing the operational condition dataset, and
generates, by the execution of the numerical computation, a plurality of pairs of data of the operational condition data set and the out-of-roundness information data of the steel pipe after the pipe expanding step corresponding to the operational condition dataset, as training data;
an out-of-roundness prediction model generation unit that generates an out-of-roundness prediction model for which an input data is the operational condition dataset and an output data is the out-of-roundness information of the steel pipe after the pipe expanding step, the generation of the out-of-roundness prediction model performed by machine learning using the plurality of pairs of training data generated by the basic data acquisition unit;
an operational parameter acquisition unit that acquires online an operational condition dataset to be set as an operational condition of the steel pipe manufacturing process; and
an out-of-roundness prediction unit that predicts online the out-of-roundness information of the steel pipe after the pipe expanding step corresponding to the operational condition dataset acquired by the operational parameter acquisition unit, using the out-of-roundness prediction model generated by the out-of-roundness prediction model generation unit.

12. The steel pipe out-of-roundness prediction device according to claim 11, further comprising a terminal device including
an input unit that acquires input information based on a user's operation, and
a display unit that displays the out-of-roundness information,
wherein the operational parameter acquisition unit updates a part or all of the operational condition dataset in the steel pipe manufacturing process based on the input information acquired by the input unit, and
the display unit displays the steel pipe out-of-roundness information of the steel pipe which is predicted by the out-of-roundness prediction unit by using the updated operational condition dataset.
